Europäisches Patentamt

European Patent Office (11) Publication number: **0 145 888**

Office européen des brevets A2

(19)

(12) **EUROPEAN PATENT APPLICATION**

(21) Application number: **84112623.8**

(22) Date of filing: **19.10.84**

(51) Int. Cl.⁴: **G 06 F 15/20**, G 06 F 3/14

(30) Priority: **15.11.83 US 552152**

(43) Date of publication of application: **26.06.85 Bulletin 85/26**

(84) Designated Contracting States: **DE FR GB IT**

(71) Applicant: **International Business Machines Corporation, Old Orchard Road, Armonk, N.Y. 10504 (US)**

(72) Inventor: **Martin, Mary Susan, 6043 Paseo Ventoso, Tucson, AZ 85715 (US)**
Inventor: **Puckett, Harley Dale, Jr., 9722 E. Colette Street, Tucson, AZ 85748 (US)**
Inventor: **Scrutchin, Thomas Wood, Jr., 33 Scenic Drive, Poughkeepsie New York 12603 (US)**

(74) Representative: **Ahlman, Bertel, IBM Svenska AB Box 962, S-18 109 Lidingö (SE)**

(54) **Method and apparatus for creating visual displays of data from an input data set.**

(57) Disclosed is a method and a means for creating a visual display of data from an input data set (22) in which the data are not fixed into display-acceptable format until the data are stored in a local memory (41) of the visual display. At least one of a plurality of sources (16, 18, 20, 34) of resource information is initially selected as required by the input data set. Control signals corresponding to the sources of resource information are thereafter embedded into the input data set to form an output data set (30). Subsequently, the selected sources of resource information and the output data set are applied to the local memory. They are concurrently taken from this local memory to produce a visual display. Fixation of the data into display acceptable format is thereby postponed until just prior to actual display to thereby provide a substantial increase in system flexibility.

Method and apparatus for creating visual displays
of data from an input data set.

The present invention relates to a method and
system for creating visual displays of data from an
input data set comprising data-representing signals
which data in the input data set are not fixed into
display-acceptable format until storage thereof into
a local memory of a visual display device.

Production of form documents in the business
environment usually involves the specification of form
"art work," the number of copies or parts, spot
carbon areas, and physical paper characteristics such
as type and size.  Such specification and subsequent
production are time consuming and expensive.  Further,
the completion of forms requires that an application
program preformat its output to match the prepared
form.  As a result, any change in the form

2  0145888

requires a corresponding change in the application program -- an expensive process. Additional difficulties may be encountered in exact data format and paper registration within the printer for even the most basic paper form document generation.

Traditionally, for basic paper form generation, application programs which produced output on a preprinted form were required to read a data record, identify and select the data fields appropriately, and format the fields. When writing these application programs, the programmer was required to specify in tedious detail the exact placement of each data field by adding padding spaces, horizontal tabulation, and other formatting controls so that information-containing fields were actually printed within the appropriate areas on the preprinted forms. If multipart forms were desired, full carbons or spot carbons were placed between sheets to enable printing a data field to register on a plurality of sheets. If certain data fields were to appear on some sheets but not on others, the sheets on which the data field was not to appear required no carbon in the fields where the data field to be suppressed was printed on other sheets.

For example, if the multipart form document being printed was a traditional U.S. W-2 Income Tax Form, the amount of state and local tax which appeared

3     0145888

in certain locations on some sheets of the form should not appear on the copy sent to the U.S. Government. Therefore, the sheet of carbon paper facing the sheet sent to the U.S. Government had no carbon facing these state and local tax locations. When the printer struck these carbonless locations, the printing of state and local tax data was suppressed from the U. S. Government's copy.

With the advent of computers having more sophisticated print facilities, the data transmitted to the printer no longer had to be fully formatted by the application program. Utility programs were developed which took over part of the task of formatting printer output and, therefore, the information which was conveyed by the application program became somewhat more skeletal. The application program was required to send only the appropriate fields in the correct order, and the utility would then combine the field information with a certain amount of printer information in a structure called a "form control block" or "form control buffer" (FCB). This FCB was a memory area for the assembly of a complete page of printer information. The fields sent by the applications program were placed in the appropriate locations within the FCB by the utility program. Once completed, the FCB was sent serially to the printer for output.

Later, non-impact printers were developed. These included ink jet, laser electrographic, electro-discharge, and thermal printers. It was not feasible to use preprinted multipart forms which employed spot carbon to suppress certain fields on some copies but not others using these non-impact printers. The lack of an impact meant that the form had to be printed several times in order to achieve an equivalent product. Because of this, the application program was required to transmit multiple copies of the same data incorporating the fields which were desired and deleting the fields which were to be suppressed for a given copy. It became apparent that the use of preprinted forms in this environment was not economical.

Additionally, preprinted forms required exact forms registration within the print mechanism in order that information fit within predefined areas of those forms. This forms registration requirement added com-plexity to an already difficult task in that paper alignment had to be maintained manually by an operator or automatically by additional expensive and complicated hardware. Thus, an alternative to the preprinted form was developed. This alternative was termed the "forms flash".

In a laser electrographic printer, a forms flash is composed of a negative plate which is physically placed within the printer and is illuminated·by a xenon flash lamp during the scan of the drum or plate by the laser. This forms flash allowed the creation of a preprinted form and simultaneous fill-in of the form by the laser. This technique, however, suffered from the inherent limitation of the physical processes required to mount a negative plate in the printer. During the mounting and dismounting process the printer could not print. This lowered the printer output and increased printing costs. The form plate, once mounted, may not be varied to suit the application, it may only be turned on or off.

It was discovered that a more efficient way of creating the form was to create an electronic overlay of the form in the FCB. The form was OR'ed with the information fields in the memory map of the FCB to arrive at a final document. This procedure involved determining which memory locations in the FCB corresponded to an area of the form and overlaying in that memory location whatever character appeared at that area of the form. This provided the added benefit of allowing forms to change during processing using software to alter the contents of the FCB. The advantage of this approach was that it eliminated the need to have several form negatives with minor variations among them. This procedure also eliminated the time-consuming and expensive process of physically storing, mounting and removing the form negatives since the FCB overlays could be stored in electronic memory.

0145888

Pending U. S. Patent Application SN 345,943 filed January 29, 1982, entitled "A Page Modification Method in a Printer Subsystem of the Partial Buffer Composing Type" by Findley shows printer action based on a host program with regard to PAGEDEF and FORMDEF which are hereinafter fully described. Application SN 345,943 is assigned to the same assignee as this application and is incorporated herein by reference.

Patent 3,959,776 to Morley teaches the construction of a programmable printer. This printer contains a microprocessor-controlled data interface which can select data information from both external sources and an internal store maintained in programmable read-only memory. The device is constructed to allow intermixing of external variable data information and internal stored fixed data information for the generation of output information in a specific predefined format.

Memory overlay of forms onto the FCB also created the possibility of combining multiple forms on the same output document. This combination could be performed by software mapping algorithms. It could not be performed in a forms flash system without creating a specific negative for each combination desired.

Patent 4,031,519 to Findley discloses a printer having an internal instruction execution unit controlled by a channel connected to a data processing unit. The instruction execution unit derives its data and control

0145888

sequences from both read-only storage and a writable control storage area. The instruction execution unit in turn controls a laser imaging apparatus. Writable storage includes buffers for information to be printed as well as instructions for the modifications of that information within the printer.

With the advent of forms combination, it became apparent that the overlays used to create preprinted forms should constitute a system level resource. Other system level resources included character fonts or type styles, segments, and suppressions.

By using the character font resource, an applications program could specify different type styles at various locations within a document. Two types of segments were available. The first type of segment included pieces of final image or copy which were repeated so often as to become inefficient to retransmit each time they were used. For example, contract or sales form boilerplate could be defined as segments. Another type of segment is a logotype or a small figure which was too large to fit within a font definition. Another resource was a suppression. A suppression was a modern day equivalent of the spot carbon form. It was a way to remove information from certain copies of a multipart printout.

Patent 4,300,206 to Belleson, et al. describes a printer having a microprocessor-controlled raster imaging apparatus. The printer contains an accumulator memory for the logical OR'ing of data bits which may include raster-coded graphics and text.

An IBM 370 system CPU (host computer) ordinarily communicates with a visual display hard copy device over an input/output channel. Such a channel is conventionally composed of a slave CPU and various pieces of adapted electronics. In addition, many printers contain data and program memories and internal CPU's generally termed instruction execution units (IEU). System 370 I/O channels are controlled by the 370 CPU via channel command words (CCW's) which instruct the channel processor in its data transmission activity.

Data transmitted over a channel to a visual display hard copy device ordinarily contain control information for that device in the form of carriage controls, or CC's, which preface a given amount of text-representing information. These CC's typically include commands for spacing, skipping to a given channel, folding and unfolding of paper, controlling paper and mechanical actions such as cover opening or paper loading, and self-diagnosis of the mechanism. Such CC's are composed of specific values for a given printer device, and such values activate specific instructions within the printer.

Typically, a block of information to be printed contains the appropriate CC's inserted there by the user of a systems level utility for print formatting.

An IBM 3800 Model 3 Printing Subsystem (announced 1982) uses a low-power laser and an electrophotographic process to generate printed output.  A photoconductor is used with electrical properties that change when it is exposed to light, and a laser subassembly scans data images onto the photoconductor.  The photoconductor is wrapped around the surface of a drum. Toner is attracted to the areas on the photoconductor.

The scan lines of data are created two lines at a time, and the resulting bit patterns are used as impulses that modulate a laser beam in the laser subassembly.  Where the raster patterns indicate a dot, the laser beam is directed through an optical system to the photoconductor, which has been electrically charged by a charge corona.  The charged areas on the photoconductor that have been exposed to the laser beam are discharged, forming electrostatic images that are suitable for development.

After the images are transferred to the paper, the photoconductor passes through a cleaner station, where it is cleaned and reconditioned for the next exposure, then through the charge corona, where it is charged again.

The use of a laser beam directed through an optical system to implement raster patterns allows the use of all-point addressability. This printing concept allows users to produce text, electronic forms, and images at any defined point in the printable area of a sheet. These points, called print elements (pels), may have a density of 240 x 240 pels per square inch.

The printing subsystem operates in two basic modes: page mode and the compatibility mode. The page mode may be used to implement all-points addressability, line generation, electronic overlays, images, and text orientation. Line generations may include solid or dashed lines. These lines may start from any defined point on the page and may have any defined length either in a horizontal or vertical direction. The types of overlays permitted include lines, boxes, shaded areas, constant text, and images such as signatures or logos. The images may be drawings, graphics or logos. Both portrait and landscape orientations are permitted. In portrait orientation the printed image is vertical along the long side of the sheet or form. In landscape orientation the printed image is vertical along the short side of the sheet or form.

The compatibility mode permits the 3800 Model 3 to emulate the 3800 Model 1 Printing Subsystem to produce output with application programs for the Model 1 with little or no change. The applications data and formatting specifications of the Model 1 have been required to be introduced sequentially on a line-by-line basis. While sequential specification of the compatibility mode is no longer required in the page mode, data specified in this format may be converted by practicing the present invention to all-points addressable format.

Generally, however, the laser assembly scans data images onto the photoconductor. Toner is attracted to the areas on the photoconductor that have been exposed to light from the laser. Paper is then passed over the surface of the photoconductor causing toner to be transferred to the paper. If a flash overlay is to be done, the photoconductor is exposed using the forms flash unit consisting of a film negative and a xenon flash lamp. A control, passes light through the film negative exposing its image onto the photoconductor.

Further information pertaining to the IBM 3800 Printing Subsystems and related support systems is available in the IBM Publications GA32-0049-0, "Introducing the IBM 3800 Printing Subsystem Model 3," GA32-0050-0, "Reference Manual for the IBM 3800 Printing

0145888

Subsystem Model 3", and GH20-9158-2, "Document Composition Facility and Document Library Facility General Information" which are incorporated herein by reference.

The present invention is dislcosed in the attached claims.

A method and a means of processing line mode data records for creating a visual display on a page printer is described. Input to the page printer is user defined page content, herein called PAGEDEF, information and line mode data records. The printing service facility (PSF) is said to be in system printing mode upon the application of PAGEDEF information. There are two major phases in a system printing mode. They are (1) loading of the PAGEDEF and (2) processing of the PAGEDEF. Objects within each PAGEDEF are called DATAMAPS. When loading the PAGEDEF information into the printing service facility address space, the system printing mode gets space for these DATAMAPS. Within the three buffered DATAMAPS are buffered structured fields, which fields are used as inputs to the system printing mode process. Throogh the use of this invention the user is able to invoke these DATAMAPS between pages to thereby allow the flexibility of intermixing of various formatted pages. Suppression of data on a page is also possible. A page is processed by matching the input line to a record with the appropriate line descriptor in the line descriptor buffer according to the presence or absence of a printer control character in the user line mode data record.

## Brief Description of the Figures

Fig. 1 depicts the overall system of the present invention in a basic block structure.

Fig. 2 illustrates the structure of Print Services Facility in greater detail.

Fig. 3 illustrates the control structures within Print Services Facility.

Fig. 4 details the format for Input Data Sets.

Fig. 5 depicts the structure of the FORMDEF file.

Fig. 6 depicts the structure of the PAGEDEF file.

Fig. 7 illustrates the format of Output Data Sets.

Figs. 8A and 8B depict a time sequence of operations of the Print Services Facility Program.

14   0145888

Fig. 9 illustrates the flow of control for the DPROC procedure.

Fig. 10 illustrates the flow of control for the DDS procedure.

Fig. 11 illustrates the flow of control for the DDOC procedure.

Fig. 12 depicts the flow of control for the DPOP procedure.

Figs. 13A and 13B show the flow of operations for the Resource Management Procedure shown on Fig. 12.

Fig. 14 shows elements 48, 52 and 54 of Fig. 12 in more detail.

Fig. 15 details the flow of operations with the SSPM Data Handler.

Fig. 16 illustrates the logical flow of the Composed Page Data Handler.

Fig. 17 depicts the internal memory and control architecture of the IBM 3800 Model 3 Printing Subsystem.

## Glossary

addressable point. A point that can be identified by coordinates.

all-point addressability. The capability to address, reference and position text, overlays and images at any defined point on the printable area of a form, either on a sheet or other image presentation medium.

channel command. A computer peripheral instruction that directs a data channel, control unit, or device to perform an operation or set of operations.

character. An element of a character set that is used as part of the organization, control, or representation of data.

character arrangement. An arrangement composed of graphic characters from one or more modified or unmodified character sets.

character raster pattern. The scan patterns for a graphic character of a particular size, weight, and style.

character set. A finite set of different characters that is considered complete for some

purpose.  It may include graphic and control characters.

compatibility mode.  A mode of operation that provides the capability to run application programs written for the 3800 Model 1 with little or no change to the application or the job control language.

control assembly.  The unit that contains the diskette file, power supplies and controls, and the control electronics.

control electronics.  The group of electronic circuits, storages, and microcode that control printing operations and communications with the host processor through a channel.

control storage.  Printer storage into which data can be entered, held, and retrieved at a later date.  Control storage contains microcode instructions and other control information; for example, the print buffer.

copy modification.  The process of adding, deleting, or replacing data on selected copies of certain pages of a data set.

electronic overlay.  A collection of constant data that is electronically composed in the host

0145888

processor and may be merged with variable data on a sheet during printing. An electronic overlay defines its own environment. It can be in coded form or raster pattern form.

font. A collection of graphic characters of one size, weight, and style, independent of code points; for example, 9 point Bodoni. A font has a unique name and may have a registry number. A font is data used to create an image of each graphic character; for example, a raster pattern.

form. A set of control data that defines informational content and its structure by specifying logical page, one or more physical sheets, lines in pages, fields within lines, items within fields, and other elements for one or many presentations of a data set.

forms control buffer (FCB). A data buffer for controlling the vertical format of printed output. The forms control buffer is analogous to the punched-paper, carriage-control tape used on IBM 1403 printers, for example.

forms design. The process of creating a constant-data design that can be used for preprinted forms, forms overlays, or electronic overlays.

0145888

forms flash unit. The unit that contains a xenon flash lamp, power supply, and optical path. It sends a flash of light through the forms overlay to the photoconductor.

forms overlay. The photographic negative of a predefined design to be exposed to the photoconductor by a flash of light. The forms overlay can be merged with variable data during printing.

graphic character. A character that is normally represented by a graphic, independent of code points or fonts. It has a registry number. A graphic character is often in the form of a spatial arrangement of adjacent or connected strokes; for example, a letter or digit.

graphic character modification. A feature that allows substitution or addition of graphic characters in an already-defined character arrangement.

host computer. The data processing unit to which the Model 3 is attached through an I/O channel interface.

image. In the Model 3, an image comprises a string of pels organized in scan lines to represent the contrasting portions of a picture. The image may

0145888

consist of any data stored as a raster pattern; for example, line drawings, signatures, computer-generated halftones, logos, designs, symbols, or characters too large or small to be printed from fonts.

laser print head. A subassembly that emits a modulated beam of coherent light, which is scanned across the photoconductor to form an electrostatic image.

library character set. A named graphic character set stored in a host system library which can be specified for printing.

library object. A named resource that is stored in a host library system.

orientation. The number of degrees an object is rotated relative to a reference; for example, the orientation of a page relative to the sheet coordinates.

overlay. A collection of constant predefined data, such as lines, shading, text, boxes, or logos, that can be merged with variable data on a form, such as on a sheet while printing. See electronic overlay, forms overlay, and preprinted form.

overstriking. The merging of two or more characters in the same position on a sheet.

page. A logical entity that may take up part or all of a sheet. One or more pages can be printed on a sheet. A page to be printed cannot be larger than a sheet.

page buffer. (1) In compatibility mode, an area in control storage in which data are stored. The data are stored one line at a time until they are ready to be printed. (2) In page mode, see print buffer.

page data. The data that make up a composed page to be printed.

page mode. The mode of operation in which the printer can accept a sheet of data at a time from a host processor to be printed on an all-points addressable output medium.

page segment. An object that can contain text and images, and that can be included on a page or electronic overlay at any addressable point. It assumes the environment of the object in which it is included.

pel (print element). (1) An element of a raster pattern; a point about which a toned area on the photoconductor may appear. (2) On an all-points addressable output medium, each pel is an addressable unit. On a row-column-addressable output medium, the only pel that is addressable is the beginning of a character cell. (3) Also termed a "pixel" or picture element.

pitch. A unit of measurement for the width of a printed character, reflecting the number of times a graphic character can be set in one linear inch. For example, 10-pitch has 10 graphic characters per inch. Uniformly spaced fonts are measured in pitches.

preprinted form. A preprinted design of constant data into which variable data can be merged.

print buffer. An area of control storage where data to be printed are stored until they are ready to be printed.

process assembly. The assembly that includes the air system, charge corona, cleaner, developer, drum, forms overlay, laser, operator panel, paper input ramp and splicer, and transfer station.

proportionally spaced font. A font in which the graphic characters are contained in character cells that vary with the size of each graphic character. This allows for even spacing between printed characters and eliminates excess white space around narrow characters, such as the letter "i."

raster pattern. A series of pels arranged in scan lines. The toned or not-toned status of each pel creates an image. A digitized raster pattern is an array of bits. The on or off status of each bit determines the tone or not-tone status of each pel. The width of a raster pattern is measured in pels, and the height in scan lines.

raster scan. A technique of generating or recording the elements of an image by a line-by-line sweep across the entire output medium.

raster pattern generator (RPG). The electronic circuits that retrieve digitized raster patterns and ·convert them into a series of scan patterns.

raster pattern storage (RPS). An area of storage that holds raster patterns for fonts and images.

rotated font. A font whose graphic character representations are rotated 90 or 270 degrees to allow for printing at those orientations on a sheet.

rotation. (1) The number of degrees a graphic character representation is rotated relative to its base line. (2) One of three directions that defines the orientation of text relative to a sheet, page, overlay, text block, or page segment.

text orientation. Sense of direction of text on a printed sheet. It is defined by specifying three parameters: baseline progression, inline progression, and rotation.

type size. (1) A measurement in pitch or points of the height and width of a graphic character in a font. (2) One of the many attributes of a font; others, for example, being weight and typeface.

type weight. (1) The degree of boldness of a typeface series caused by different thicknesses of the strokes that form a graphic character. (2) One of the many attributes of a font; others, for example, being size and typeface.

underscore. One or more lines under a graphic character. This function is supplied either through hardware or overstriking with an underscore character, a rule, or a font.

uniformly spaced font. A font in which the graphic characters are contained in character cells of uniform size. The distance between reference points of adjacent graphic characters is constant in the inline progression. The white space between the graphic characters may vary.

0145888

## Acronyms

| | |
|---|---|
| AEG | Active Environment Group |
| ANSI | American National Standards Institute |
| BDS | Begin Data Set (Structured Field) |
| CC | Carriage Control |
| CCW | Channel Command Word |
| CPDS | Composed Page Data Set |
| CPU | Central Processor Unit |
| CRT | Cathode Ray Tube |
| DASD | Direct Access Storage Device |
| FCB | Forms Control Buffer |
| EDS | End Data Set (Structured Field) |
| FORMDEF | Forms Definition File |
| ID | Identification |
| IDS | Input Data Set |
| IEU | Instruction Execution Unit |
| I/O | Input/Output |
| JCL | Job Control Language |
| MEG | Master Environment Group |
| ODS | Output Data Set |
| PAGEDEF | Page Definition File |
| PPWTR | Pending Page Writer |
| PSF | Print Services Facility |
| ROFD | Record Output Format Definition |
| SSPM | Systems Printing Manager |

0145888

## Program Modules

| | |
|---|---|
| DPROC | Document Processor Main Module |
| CCLR | Subsystem Clear and Reset |
| DDS | Data Set Processor |
| DLOAD | Resource Loader |
| DDOC | Process Document |
| DPEG | Page Environment Group Processor |
| DGFE | Generate Form Environment |
| DPOP | Page Processor |
| DGPE | Page Environment Group Subprocessor |
| DIPS | Included Page Segment Processor |
| DIMG | Image Processor |
| DTEXT | Text Processor |
| None given | SSPM Data Handler |
| None given | Composed Page Data Handler |
| ERROR | |

## Detailed Description of the Invention

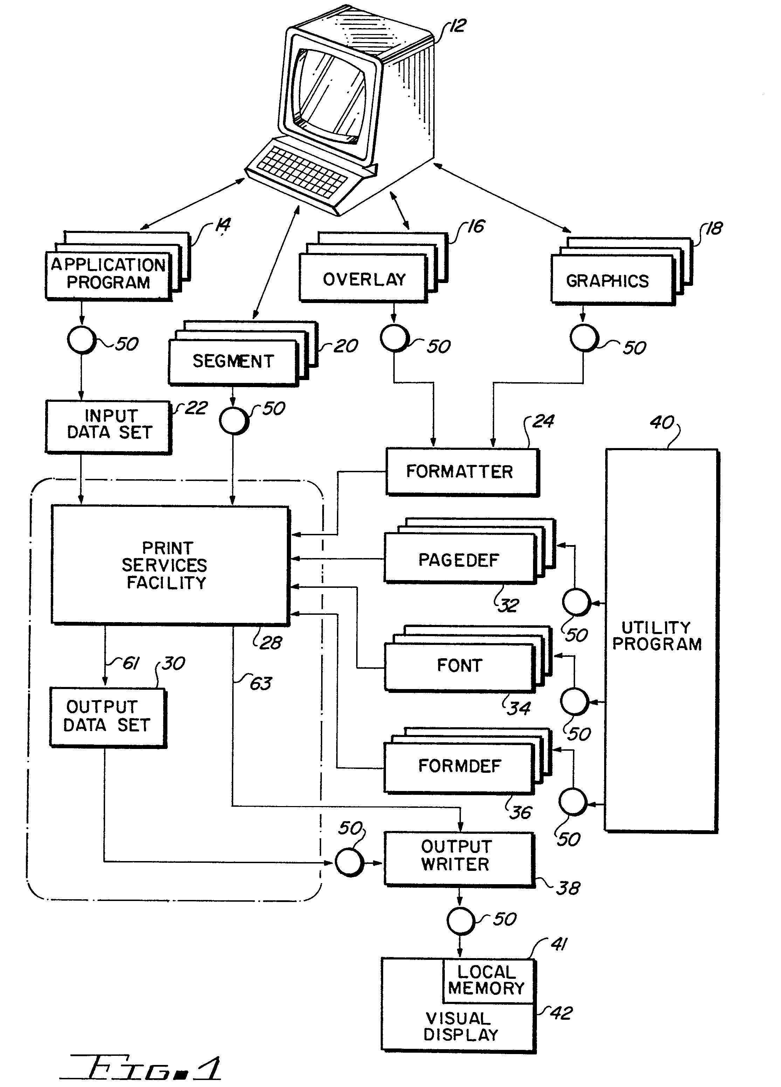

Referring now to Fig. 1, there is shown a system block diagram of a visual display system in which it is possible to extend the time at which data to be visually displayed are fixed in display equipment acceptable format, allowing a greater amount of flexibility in the visual presentation of data. The print services facility 28 (PSF) is software which executes upon a conventional host computer such as an IBM-370 System. PSF 28 fixes data for a visual display by visual display unit 42 at a point much later in the overall display process than during execution of application program 14 of the host computer.

Heretofore, application data processing programs were required to format data on a sequential, line-by-line basis. Under the present invention, the application program need merely point to a block of information in order to have that information processed for visual display.

Application program 14 creates input data set 22 (IDS). PSF 28 formats input data set 22 by accessing direct access storage device 50 (DASD) to retrieve input data set 22 and various system resources including segments 20, overlays 16, graphics 18, and fonts 34, under the direction of PAGEDEF 32 and FORMDEF 36. For purposes of clarity, it should

0145888

be noted that the direct access storage device 50 is a mass storage memory and, although referenced herein by a common reference numeral 50, it may well comprise a plurality of storage devices.

Each PAGEDEF 32 is a page definition file through which the formatting of lines on a logical page of output is specified. This page definition file is external to the application program and to PSF 28. PAGEDEF 32 is created by utility program 40 and placed on DASD 50 for later use by PSF 28. PAGEDEF 32 is composed of one or more data maps 124 which contain line descriptors 150 for interpreting line data in IDS 22, embedding text controls indicative of system resource usage into output data set 30, and mapping individual data records of line data into output pages of output data set 30.

Each FORMDEF 36 is a form definition file through which the identities of various systems resources required for output data set 30 are specified. FORMDEF 36 also specifies the overall format of output data set 30. The "form" specified corresponds to an actual physical page which may contain a plurality of logical pages. FORMDEF 36 is also external to the application program and to PSF 28. It is created by utility program 40 and placed on DASD 50 for access by PSF 28 when constructing output data set 30.

Using a plurality of PAGEDEF's 32 and a plurality of FORMDEF's 36 it is possible to effect dynamic changing of the visual display produced by visual display device 42. These changes occur in the host computer prior to the generation of the output data set 30 to be supplied to visual display device 42, rather than in application program 14. An output data set 30, stored in local memory 41 of visual display 42, may be successively displayed with different overlays 16, segments 20, fonts 34 and with different portions suppressed during the various presentations. This dynamic changing is possible because many selectable PAGEDEF's 32 and FORMDEF's 36 are available on DASD 50, and because different environments may be specified within a PAGEDEF 32 and/or within a FORMDEF 36. By selecting different PAGEDEF's 32 and FORMDEF's 36 from DASD 50, different environments within an active PAGEDEF 32 or FORMDEF 36, or different subcases 140, very different visual displays selectively having differing informational content may be produced for the same input data set 22.

Application program 14 and the software of PSF 28 are stored and executed in the main memory of the host computer for which visual display 42 is an output device. Input data set 22 is the output of application program 14 and is stored in a distinct area of DASD 50. Likewise, each PAGEDEF 32 and each FORMDEF 36 is stored in a distinct areas of DASD 50. Thus, PAGEDEF 32 and FORMDEF 36 are external objects with respect to application program 14, input data set 22, PSF 28, and the software of PSF 28. The appropriate FORMDEF 36 for a particular input data set 22 from an application program 14 is called up by the job control language (JCL) which is used with application program 14 or over a network. Thus, different visual displays may be produced for that input data set 22 by specifying different FORMDEF's 36 in the JCL.

The various system resources, as seen in Fig. 1, include segments 20, overlays 16, graphics 18, and fonts 34. All system resources are also external to application program 14, input data set 22, PSF 28 and the software of PSF 28 as well as to PAGEDEF 32 and FORMDEF 36. Segments 20 are pieces of final image or copy, such as repetitive information, which are repeated so often as to become inefficient to retransmit each time they are required for display. These segments 20 are given segment names and stored on DASD 50. Overlays 16 perform a role similar to that of the forms flash. They are created by coding an "overlay definition" using input/output device 12. The result is a stored definition of a blank form which may be printed simultaneously with variable data produced by application program 14. A human operator may also use input/output device 12 to create graphics 18. Both overlays 16 and graphics 18 are stored on DASD 50 and are processed and formatted by formatter 24 prior to use by PSF 28. Fonts 34 are definitions of characters which may be created interactively on a CRT screen using utility program 40.

PSF 28 embeds into the data stream, obtained from IDS 22, text controls which represent the system resources required to produce finished documents on visual display 42. The resulting output data stream, in the form of output data set 30, is transmitted to local memory 41 from PSF 28 via logical channel 61. The system resources, which correspond to the embedded text controls, are transmitted to local memory 41 via a separate logical resource channel 63 for subsequent processing and merging with other text and graphics data within visual display 42 after the changes are implemented in the host computer. The merging of data from channel 61 and resources from channel 63 in local memory 41, termed inclusion control, and the fixing of the form of final visual display documents, occur at a last stage before visual display rather than during execution of application program 14. This merging at the last stage before visual display permits dynamic changing of the visual presentation. The same data or selected portions of such data from an application program 14 may be merged with different system resources to produce different visual presentations.

After construction of output data set 30 by PSF 28, output writer 38 is executed. Output writer 38 is system software which controls the input/output channel using channel command words (CCW's) in order to effect display on visual display 42.

Visual display 42 may be an all-points addressable, laser electrographic printer with local subsystem memory. Visual display 42 includes a local memory 41 and is capable of performing overlays and forms flashes and may be an IBM 3800 Model 3 printing subsystem, previously described.

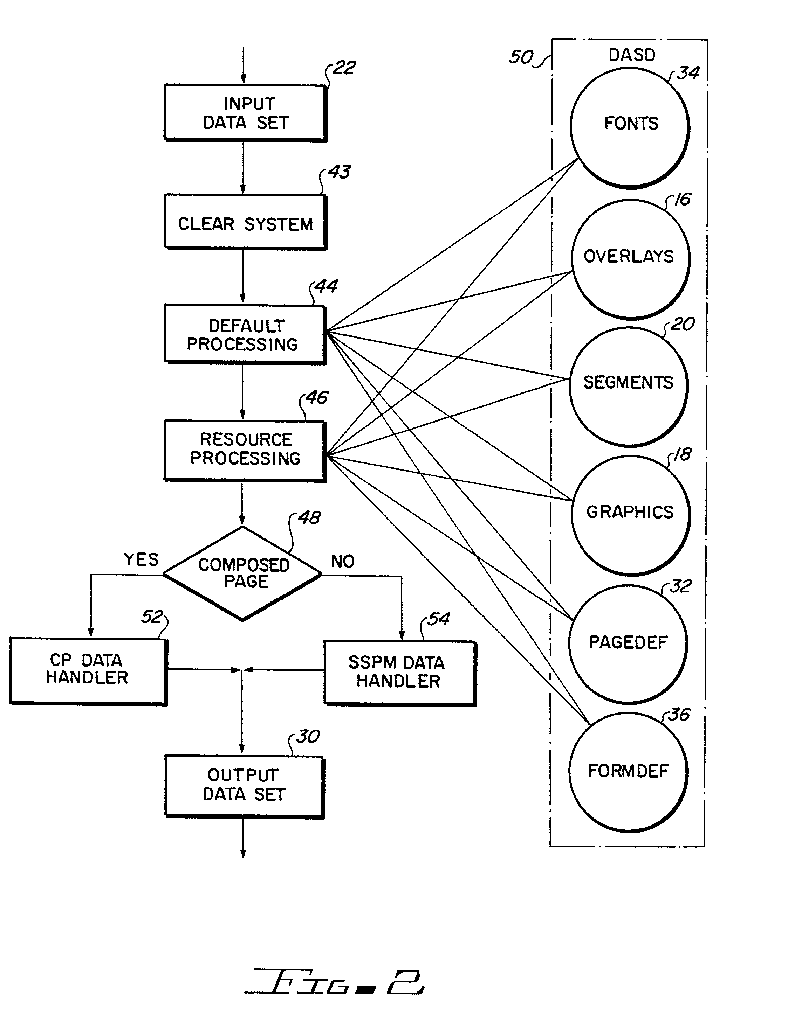

Fig. 2 is a high level, logical diagram of the processes which occur within the PSF 28 when input data set 22 is processed to produce output data set 30. Visual display unit 42 contains a large amount of local subsystem memory 41. A first operation which must be performed, as seen in block 43 of Fig. 2, is the clearing of this local memory 41 to remove pointers and other information which may remain after completion of a prior visual display task. In block 44 of Fig. 2, default conditions for visual display are established using default FORMDEF and PAGEDEF files in order to determine those resources used in output data set 30. Defaults are established to allow processing of an input data set which does not request specific resources. For example, if input data set 22 does not specify a particular font, the default font for the system is used. This default font would, therefore, be specified in block 44.

In block 46 of Fig. 2, resource processing occurs. The movement of resources to the local memory 41 of visual display 42, which occurs in block 46, is handled over a logical resource channel 63 as shown in Fig. 1. In this step, a resource manager within PSF 28

32 0145888

overrides any defaults established in default processing block 44 when required to do so by specifications contained in PAGEDEF 32, FORMDEF 36, or IDS 22. As seen in Fig. 2, the processing which takes place in blocks 44 and 46 both require access to DASD 50 in order to obtain the systems resources shown: fonts 34, overlays 16, segments 20, and graphics 18. In addition, these processes must also access PAGEDEF 32 and FORMDEF 36 stored on DASD 50.

Input data set 22 may contain a plurality of records which, along with various system resources, are formatted and combined by print services facility 28. These records may be divided into two categories: those that are in conventional line data format and those that are already in a composed page data set format (CPDS). CPDS format is a format which is appropriate for all-points addressable display including control characters corresponding to system resources. Line data format input data sets are produced by application programs having output destined for line printers, such as many programs written prior to the present invention. Those input data sets from application programs written to be compatible with the all-points addressable displays are already in the CPDS format for composed pages.

Decision diamond 48 makes the determination of input data set type. For the data which are in CPDS composed page form, execution proceeds using CPDS data handler 52. If, however, input data set 22 is in conventional line data format, SSPM data handler 54 is executed. SSPM is the systems printing manager. It is in SSPM data handler 54 that line data are converted to the composed page format. The received line data may include data having a format compatible with CPDS composed page data, as will become apparent. These include CPDS records and entire pages of CPDS format. This mixture of line data and CPDS format is termed "mixed mode". In both cases, an output data set 30 is produced. When this mixture is encountered, SSPM data handler 54 separately processes the CPDS format records. The term systems printing data refers to data which are pure line data and to data sets which contain this mixture.

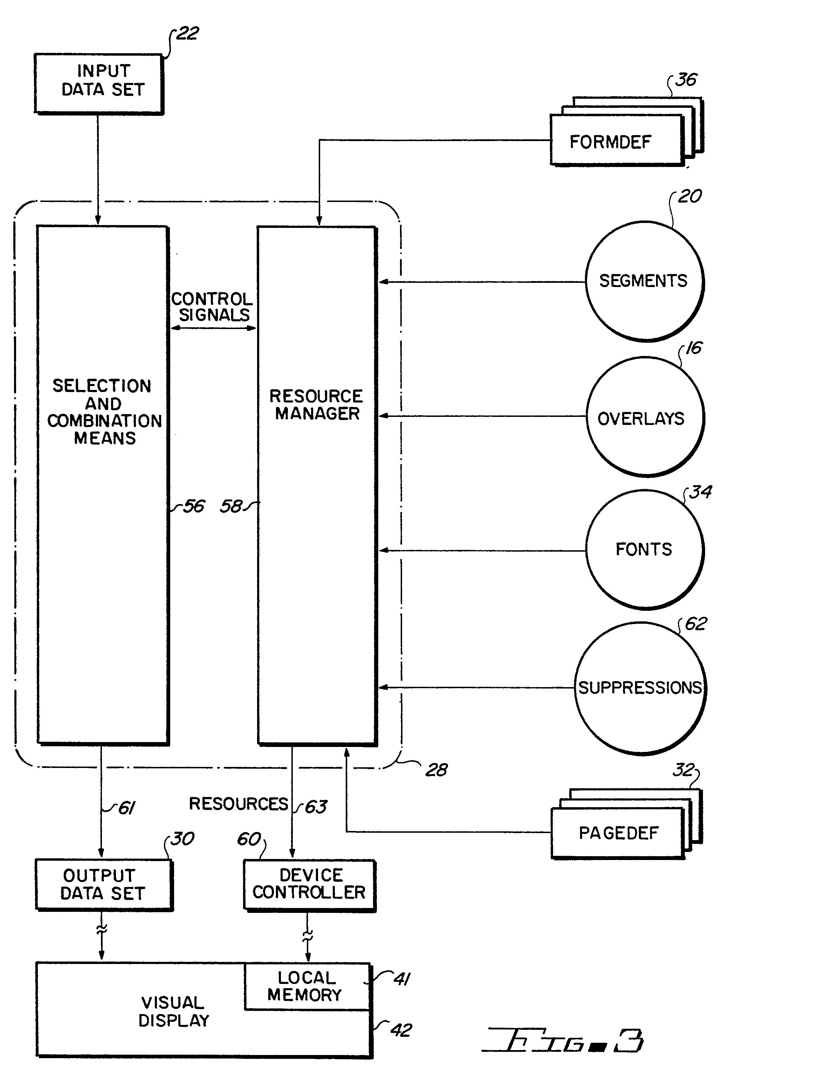

As seen in Fig. 3, PSF 28 contains selection and combination means 56 and resource manager 58. Selection and combination means 56 receives input data set 22 and merges into it inclusion control signals (referred to as channel command words or presentation-control signals) received from resources manager 58. Resource manager 58 receives from selection and combination means 56 the names of the resources required by input data set 22. Resource manager 58 then examines the list of resources currently resident in the memory of visual display 42. If the resource requested is not currently resident within the memory of visual display 42, resource manager 58 retrieves it from DASD 50. It then communicates to selection and combination means 56 a text control corresponding to that resource and transmits that resource to device controller 60 using logical resource channel 63.

Combination and selection means 56 embeds the text control received from resource manager 58 into input data set 22 and thereby constructs output data set 30. The internal structure of output data set 30 is, therefore, a series of signals representative of text and resources to be included. When complete, output data set 30 is transmitted to visual display 42 via channel 61.

As previously described, it is possible to have different portions of output data set 30 suppressed on different copies produced by visual display 42. This selective suppression of data is performed by visual display 42 under the direction of FORMDEF 36 and either PAGEDEF 32 or application program 14. FORMDEF 36 controls which copies of output contain the data and which copies have the data suppressed. However, in order to be a candidate for suppression under the control of FORMDEF 36, a data item must first be primed by either PAGEDEF 32 or application program 14. This represents the equivalent of a logical AND operation in which suppression occurs only if FORMDEF 36 directs the suppression and the data item being suppressed was previously primed for suppression.

35                    0145888

Whether the information to be suppressed is primed by PAGEDEF 32 or by application program 14 depends on whether application program 14 was written to be compatible with the all-points addressable printer and is, therefore, already in CPDS form or to be compatible with a conventional line mode printer. If application program 14 was written to be compatible with an all-points addressable printer, the input data set 22 contains primed candidates for suppression before application to PSF 28. If application program 14 produces an input data set 22 containing conventional line mode data, the priming of the data to be suppressed occurs under the direction of PAGEDEF 32 while the data are being processed by PSF 28.

In either case, priming the data comprises bracketing them with characters which are interpreted by visual display 42 as indicating the beginning and end of the suppression. These bracketed data are included in output data set 30 along with data which are not primed for suppression. When the bracketed data are encountered by visual display 42, a determination is made under the control of FORMDEF 36 whether the data are to appear on the copy currently being produced.

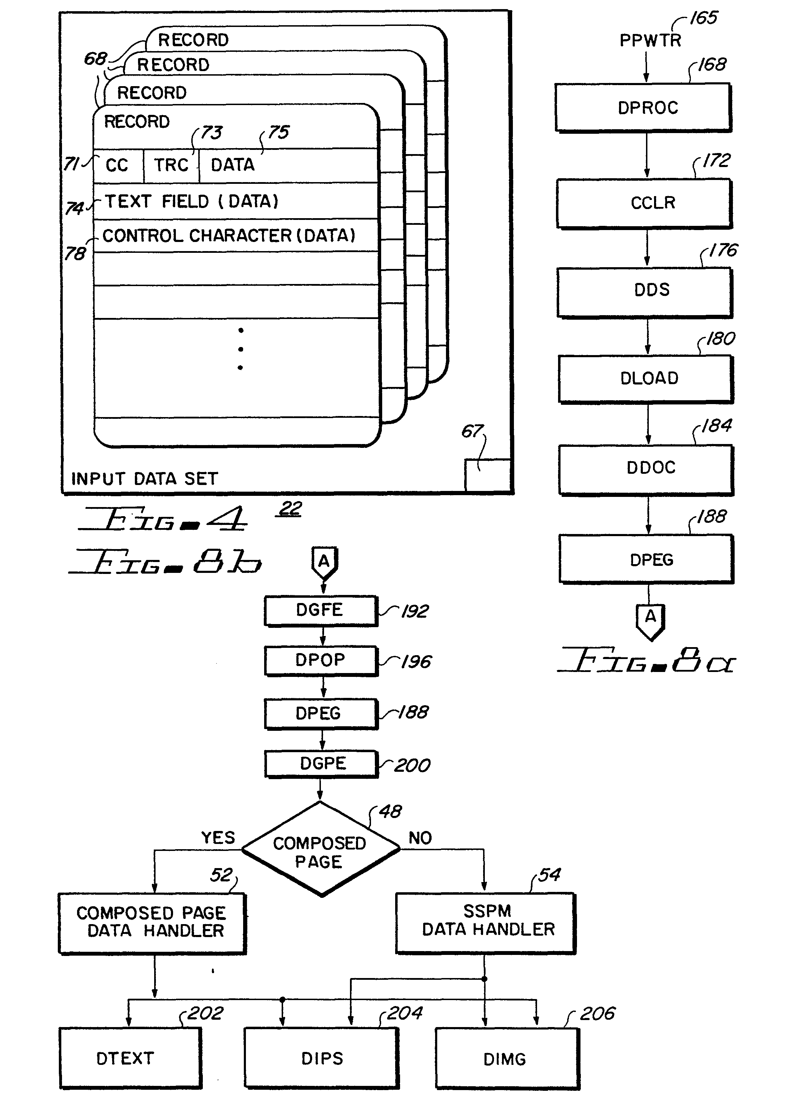

Referring now to Fig. 4, an input data set 22 is shown. As seen in Fig. 1, input data set 22 is produced by application program 14 and processed by PSF 28 under the control of PAGEDEF 32 and/or FORMDEF 36 to

construct output data set 30. Input data set 22 contains a plurality of records 68 received in the order in which they are outputted by application program 14.

An input data set 22 having conventional line mode only contains records 68 which begin with a carriage control 71. Additionally, record 68 has a Table of Reference Characters 73 which is used in the process of selecting fonts 34. Additionally, record 68 has data 75 which contains a plurality of text fields 74 and a plurality of control characters 78. The input data set shown in Fig. 4 is a model of the data set produced when conventional line mode data are output from application program 14. This figure is, of course, not applicable to input data sets already in CPDS format.

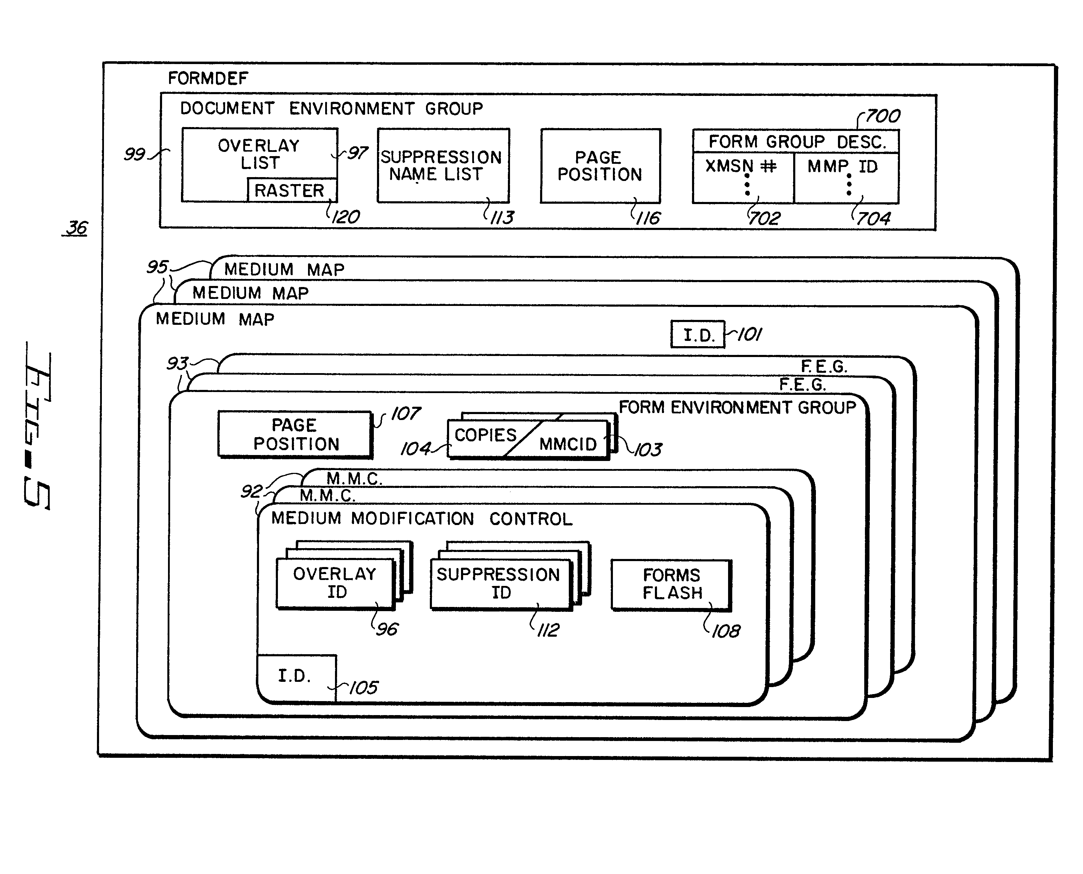

Referring now to Fig. 5, FORMDEF 36 is seen as a form definition file used to specify the number of copies to be made of the data contained in an input data set 22 and the modifications to be made on each copy. A FORMDEF 36 may be used to make multiple copies of a page from a single page of data, with each copy modified using various system resources. Each medium modification control 92, as shown in Fig. 5, controls the format of a logical page and may contain specifications for a plurality of copies of the logical page, as identified in copies 104. Copies 104 are linked with a medium modification control I.D. 103 (MMCID). Each medium modification control 92 has an I.D. 105 which corresponds to MMCID 103. This is used to link the number of copies indicated by copies 104 with the corresponding medium modification control 92. Thus, copies 104 will indicate how many copies of a logical page are made using a given medium modification control 92.

Within each medium modification control 92 is a plurality of overlay I.D.'s 96, a plurality of suppression I.D.'s 112, and forms flash 108. Each overlay I.D. 96 specifies the name of one of a plurality of overlays which may be used for the logical page controlled by medium modification control 92. Suppression I.D. 112 indicates which of the sections of text previously primed for suppression are to actually be suppressed by visual display 42 in the copies produced by using a given medium modification control 92. These sections of text may be primed in application program 14 if application program 14 were written to be compatible with the all-points addressable printer and to produce an input data set 22 in CPDS format. If application program 14 produces an input data set 22 containing conventional line mode data, the data to be suppressed are located and primed under the control of a PAGEDEF 32. In either case, the data to be suppressed are primed by bracketing with the appropriate control characters. Suppression I.D.'s 112 contain the control information to determine whether such bracketed information is to appear or to be suppressed on the copy or copies controlled by the current medium modification

0145888

control 92. In order for suppression by suppression I.D. 112 to be effective, the data to be suppressed must be primed for suppression.

Forms flash 108 is a software switch which enables or disables the xenon flash within visual display 42 when the logical page is produced. Page position 107 indicates the horizontal and vertical position of the logical page produced under the control of medium modification control 92 on the physical page. Medium modification control 92, page position 107, copies 104, and MMCID 103 determine the form of the document produced and constitute a form environment group 93.

Normally, there is one form environment group 93 per medium map 95. However, the ability to include a plurality of form environment groups 93 within a medium map 95 allows electronic collation of sets of forms with various modifications among them. For example, it may be desired to produce five copies of an output that is four pages long. Rather than producing five copies of the first page, five copies of the second page, etc., it is possible to produce pages one through four five times with each set having the modifications particular to it. This is accomplished by transmitting output data set 30 five times with each transmission keyed to one of five different form environment groups 93, each form environment group 93 defining the modifications on its set.

The transmissions are sequentially controlled by the form environment groups 93 with, for example, the first transmission being controlled by a first form environment group 93, the second transmission being controlled by a second form environment group 93, etc. Alternately, more than one transmission may be controlled by the same form environment group 93. The differences among the five sets are implemented by specifying different overlay I.D.'s 96 and suppression I.D.'s 112 within the appropriate form environment groups 93. In order to support this function, therefore, a plurality of form environment groups 93 is required with each group 93 corresponding to an appropriate sequential transmission of output data set 30. If there is no active form environment group, the whole page is suppressed.

The plurality of medium maps 95 within FORMDEF 36 enables dynamic changing of the formatting of documents. Output data set 30 is transmitted to local memory 41 of visual display device 42. In video display 42 it is fixed into a final display format using various selectable overlays 16, suppressions, etc., specified within a medium map 95 which identifies a form to be used. This allows the same data set to be printed in various formats using the same output data set 30 and FORMDEF 36. Each different format produced by visual display 42 for subsequent transmission of the same output data set 30 may be specified by a corresponding medium map 95. Alternately, several variations of output data set 30 may be transmitted and controlled by the same medium map 95.

In order to assist in this specification of a corresponding medium map 95, document environment group 99 contains form group description table 700. This table contains two lists: a transmission number list 702 and a medium map I.D. list 704. It is possible to determine the appropriate medium map 95 for each subsequent transmission by locating the transmission number in list 702 and choosing the corresponding entry in list 704. The corresponding entry in list 704 is a medium map I.D. 101 which identifies the appropriate medium map 95.

As an illustrative example, consider a Tax Form. When this document is prepared for employees who reside in New York City there must be a New York City W-2, a New York State W-2, and a U. S. Government W-2 for the corresponding local tax, state tax and Federal tax. The production of these forms may be implemented using a single medium map 95 with a single form environment group 93 and three medium modification controls 92 within the form environment group 93. Each medium modification control 92 corresponds to one of the three W-2 forms and has slightly different overlays and suppressions, since each W-2 must have the appropriate identifying language and some W-2 forms contain data not contained in others. Since two copies of each W-2 form are required, copies 104 will specify two for each medium modification control 92.

However, employees who are residents of the State of New Jersey may not require New York W-2 forms. For these employees, a second medium map 95 may be employed, the second medium map 95 containing a single form environment group 93 which does not contain medium modification control 92 corresponding to the New York City W-2 form. Thus, there is a first medium map 95 with medium map I.D. 101 corresponding to employees who are residents of New York State, having three medium modification controls 92, and a second medium map 95 with its corresponding medium map I.D. 101 for employees of the State of New Jersey, this second medium map 95 having only two medium modification controls 92. In order to invoke the different medium map I.D.'s 101, the user places an invoke medium map structured field record into the line data of input data set 22 and names the medium map desired. This is required because current JCL only permits specification of the FORMDEF 36 itself as an external object, not the internal elements of FORMDEF 36. An invoke medium map may select internal elements of FORMDEF 36.

Only one invoke medium map is permitted per page. The invoke medium map may occur between pages for systems printing data. When this occurs the medium map 95 invoked is used on all pages until a new medium map 95 is invoked. If there is a CPDS record in systems printing data, the invoked medium map 95 applies to that CPDS record. However, any CPDS page which occur in the systems printing data are controlled by their own internal invoke medium maps.

Again turning to Fig. 5, each FORMDEF 36 has an overlay list 97. Overlay list 97 contains an overall list of all of the overlays 16 specified in the plurality of overlay I.D.'s 96 which are specified in all of the plurality of medium modification controls 92 within the plurality of form environment groups 93 within the plurality of medium maps 95. These overlays, when stored in local memory 41, may be in a raster form. Within overlay list 97 there is a raster indicator 120 for each overlay specifying whether that overlay is in raster form.

Likewise, each FORMDEF 36 contains a suppression name list 113. This suppression name list 113 contains the names of all the suppressions that are identified in all the suppression I.D.'s 112 of a given FORMDEF 36. Page position 116 is a high level specification of locations on the printed physical page at which the various logical pages produced by a FORMDEF are positioned. It, therefore, acts as a default page position for all forms produced using a FORMDEF 36. However, for any given individual logical page to be later printed under the control of the FORMDEF 36, page positioner 116 may be overridden by that logical page's individual page position 107 within that page's individual form environment group 93. Overlay list 97, with its corresponding raster indicators 120, suppression name list 113, and page position 116, constitute the document environment group 99.

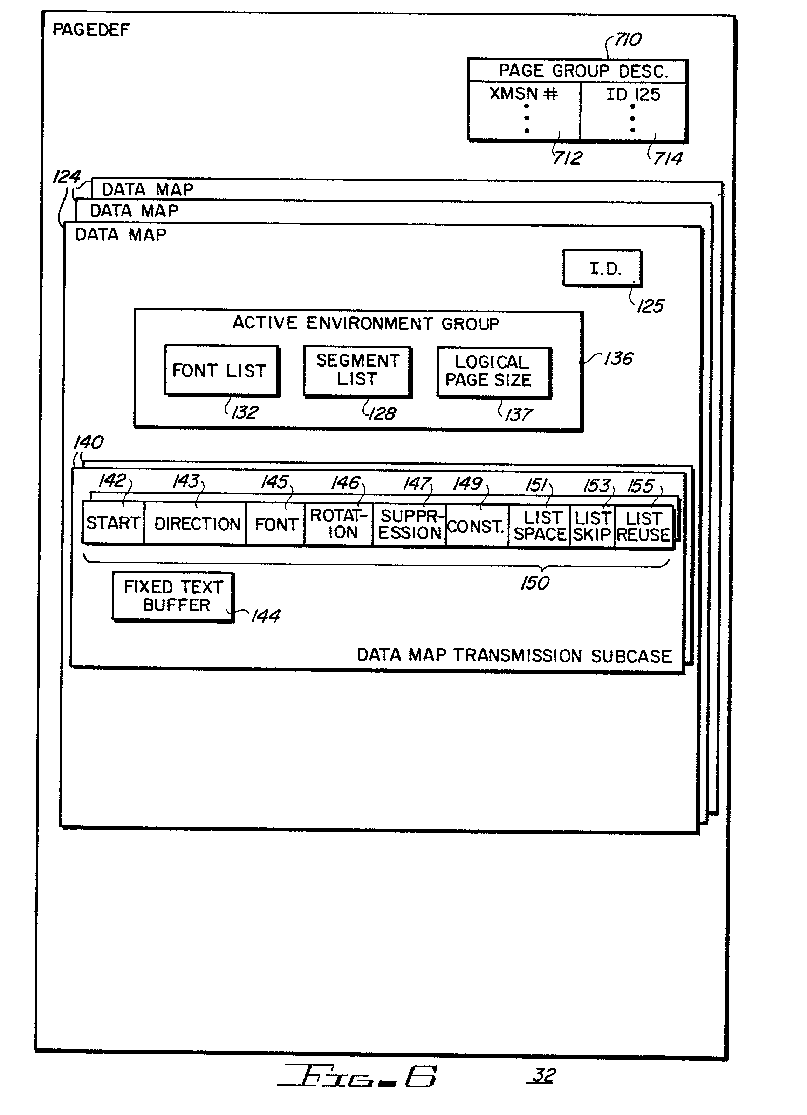

Referring now to Fig. 6, the details of PAGEDEF 32 are shown. PAGEDEF 32 is a page definition file which controls PSF 28 in its processing of an input line mode data set 22 seen in Fig. 4. PAGEDEF 32 is also referred to as page map. PAGEDEF 32 is used to interpret systems printing data and convert them to the composed page format appropriate for visual display 42. PAGEDEF 32 contains a pluraliity of data maps 124, each having an I.D. 125 and an active environment group 136. Each PAGEDEF 32 may also contain a plurality of data map transmission subcases 140. Embedded commands within input data set 22 selectively invoke a desired data map transmission subcase 140. Contained within data map transmission subcase 140 are a plurality of line descriptors 150 and a fixed text data 144.

There is a line descriptor 150 for each record controlled by data map 124, each containing the information required to format a record of line mode data of input data set 22 into the proper spatial and informational relationships for visual display 42. Each line descriptor 150 contains a start field 142 which specifies the location for initiating display of a record; a direction field 143 which specifies which direction from the start position printing is to proceed; a font field 145 which specifies which font 34 is used for printing or displaying the record; a rotation field 146 which specifies the rotation of the base line of the characters within the record; a suppression field 147 which specifies the parts of a

0145888

particular record which are to be primed for suppression; and a constant data field 149 for inserting known constant data into the output display.

Suppression field 147 merely primes data for later suppression. Data which are primed as candidates for suppression at this level may appear on some forms but be suppressed on others under the control of the same FORMDEF 36. However, FORMDEF 36 may never enable suppression of a data item by visual display 42 which is not primed. Note that the priming of data for suppression, which is controlled by suppression field 147, is only applicable to conventional line mode data. Suppression of data already in CPDS format, as well as all other operations performed on CPDS format, is not controlled by line descriptor 150.

All of the constant data used in the visual presentation controlled by a data map 124 are contained in fixed text data 144. This constant data may be used to replace text within the record corresponding to the line descriptor 150. Constant data field 149 contains an offset pointer into fixed text data 144 which indicates where in fixed text data 144 the beginning of the constant data required by the descriptor 150 are located. Constant data field 149 also contains a length indicator in line descriptor 150 which specifies how many bytes of fixed text data 144 are used.

In addition, line descriptor 150 contains three pointers, each for linking its line descriptor 150 with other line descriptors 150 to form three distinct chained lists. There is a line descriptor 150 corresponding to each record controlled by a data map 124. Depending on the CC 71 at the beginning of the record 68, the same line descriptor 150 may be used for several records 68 or several line descriptors may be skipped when processing successive records 68.

Fig. 1 will now be considered in conjunction with Fig. 6. An input data set 22, which is in line data format, has carriage controls that contain the instructions for placing data on the page in a line-by-line, sequential order. This order corresponds to the order of generation of these lines of data by application program 14. Such line mode format data are converted to composed page output data sets 30 by interactions of PSF 28 and PAGEDEF 32.

The three pointers in line descriptor 150 (each corresponding to one of the three chained lists) comprise list space pointer 151, list skip pointer 153, and list reuse pointer 155. Whether PSF 28 spaces, skips line descriptors, or reuses lines of text (whether the list corresponding to pointer 151 or 153 is used) depends upon the control character in line mode records in input data set 22. Whether PSF 28 reuses lines of text (whether the list corresponding to the pointer 155 is used) depends upon PAGEDEF 32.

Referring to Fig. 18A, an illustrative example of the use of line descriptor 150 within PAGEDEF 32 is shown. Fig. 18A shows a PAGEDEF 32 with n line descriptors and an input data set 22 containing records 68. Records 68 contain a carriage control 71 (CC) and data 75. Using the carriage control 71, the appropriate line descriptor 150 for each record 68 is chosen, as seen in block 758. Record 68 containing data 75 is shown containing three fields 74: field 74b containing data B, field 74c containing data C, and field 74d containing data D. A plurality of line descriptors 150a-d is also shown.

Line descriptor 150a contains the information necessary to specify the printing of record 68, as shown in output page 784. That is to say start field 142 specifies that record 68 is printed at location 776 in the upper left-hand corner of output page 784. This record is printed with the normal direction and rotation shown, with an appropriate font 34 specified in field 145, and with no suppressions specified in suppression field 147.

Line descriptor 150b contains the information necessary to specify the printing of field 74b as shown at location 780 within output page 784. Line descriptor 150b is linked to line descriptor 150a in the next location of the chained list linked by the pointer in the list reuse pointer field 155. This information directs visual display 42 to use line descriptor 150b immediately after using line descriptor 150a and to reuse record 766 with line descriptor 150b. Within line descriptor 150b, start field 142 specifies the printing of field 74b at location 780 within output page 784. Again, direction field 143 and rotation field 146 specify the normal direction and rotation. However, suppression field 147 of line descriptor 150b contains the appropriate information to prime fields 74c and 74d for suppression in order to display only field 74b as shown.

Following the reuse-chained list specified in the list reuse field 155 of line descriptor 150b, visual display 42 is directed to reuse record 68 and to use the specification information contained within line descriptor 150c which is pointed to by list reuse field 155 of line descriptor 150b. The start field 142 of line descriptor 150c specifies that field 74c be displayed at location 778 of output page 784 as shown. Suppression field 147 of line descriptor 150c specifies the priming of fields 74b and 74d for suppression.

Line descriptor 150d, linked with line descriptor 150c in the manner previously described, contains a start field 142 corresponding to location 782 and an appropriate font specification in font field 145. Suppression field 147 of line descriptor 150d specifies that fields 74b and 74c be primed for suppression. However, in the case of field 764, rotation field 146 specifies the rotation shown at 782 of output page 784.

Alternately, the baseline of field 74d could be left unrotated and direction 143 could be used to specify the relationship between print direction and baseline as shown.

This example thus shows how a record of data may be displayed at different start locations, with different suppressions, and with different rotations. Furthermore, it shows how a record may be reused and how portions of it may be suppressed using the reuse-chained list. After following the reuse-chained list from line descriptor 150a through to line descriptor 150d, the next line descriptor 150 is chosen using either the space-chained list or the skip-chained list as desired.

Fig. 18B shows a more specific example of the use of line descriptors 150. A PAGEDEF 32 and an input data set 22 are shown. PAGEDEF 32 contains a plurality of data map transmission subcases 140 containing a plurality of line descriptors 150a-n. Input data set 22 contains conventional line mode data arranged in records 68, each record 68 containing a CC 71 and data 75. Within selector 786, the control character CC within each record 68 selects the appropriate line descriptor 150 and the records of input data set 22 are displayed as shown in output page 788.

PAGEDEF 32 also contains font list 132, segment list 128, and logical page size 137. Font list 132 contains an overall list of all the fonts required by all the font fields 145 of all of the line descriptors 150 for a given data map 124. Segment list 128 contains a list by name of all the segments identified in a data map 124. A segment 20 is a final image, text with graphics, or copy which is repeated so often as to become inefficient to retransmit each time it is required for visual display. It is, therefore, stored as a segment 20 with a segment name on DASD 50. When resource manager 58 of Fig. 3 processes an input data set 22 under the control of a PAGEDEF 32, segment list 128 is compared with a list, internal to resource manager 58, which contains the I.D. of all segments 20 currently resident in the local memory 41 of visual display 42. If a segment I.D. is found in segment list 128 and is not found in the list of resident segments, it is accessed from DASD 50 and transmitted to visual display 42 via logical resource channel 63.

Since the size of a logical page within the actual physical page may vary, logical page size 137 specifies the printable area which is under the control of the data map 124. Font list 132, segment list 128, and logical page size 137 together constitute the active environment group 136 for the logical page controlled by the data map. Input data sets 22 which are in CPDS format also contain a plurality of pages, each of which may also have an active environment group. Additionally, CPDS has a master environment group which contains default information for pages which do not contain a complete active environment group. If the active environment group 136 is only partially defined, the parts not defined default to the master environment group. Since every data map 124 has its own active environment group 136, PAGEDEF 32 never defaults to a master environment group.

The various data maps 124 within a given PAGEDEF 32 are called according to their I.D. 125 from the invoke medium map in the input data stream. The plurality of data maps 124 within PAGEDEF 32 allows dynamic changing of the format of pages in much the same fashion that the plurality of medium maps 95 within FORMDEF 36 allows dynamic changing of the format of documents. Thus, the same logical page of output data may be printed in various formats using the same PAGEDEF 32 by keying successive transmissions of the output data with variations in output format to successive data map I.D.'s 125. Alternately, this may be accomplished by keying successive transmissions to various transmission subcases 140.

In order to assist in keying successive transmissions to the appropriate data map 124, PAGEDEF 32 contains page group description table 710. Page group description table 710 contains two lists: a transmission number list 712 and a data map I.D. list 714. The appropriate data map 124 is determined by locating the transmission number of the current transmission in transmission list 712 and choosing the corresponding entry in I.D. list 714. The corresponding entry in list
714 is the I.D. 125 of the appropriate data map 124.

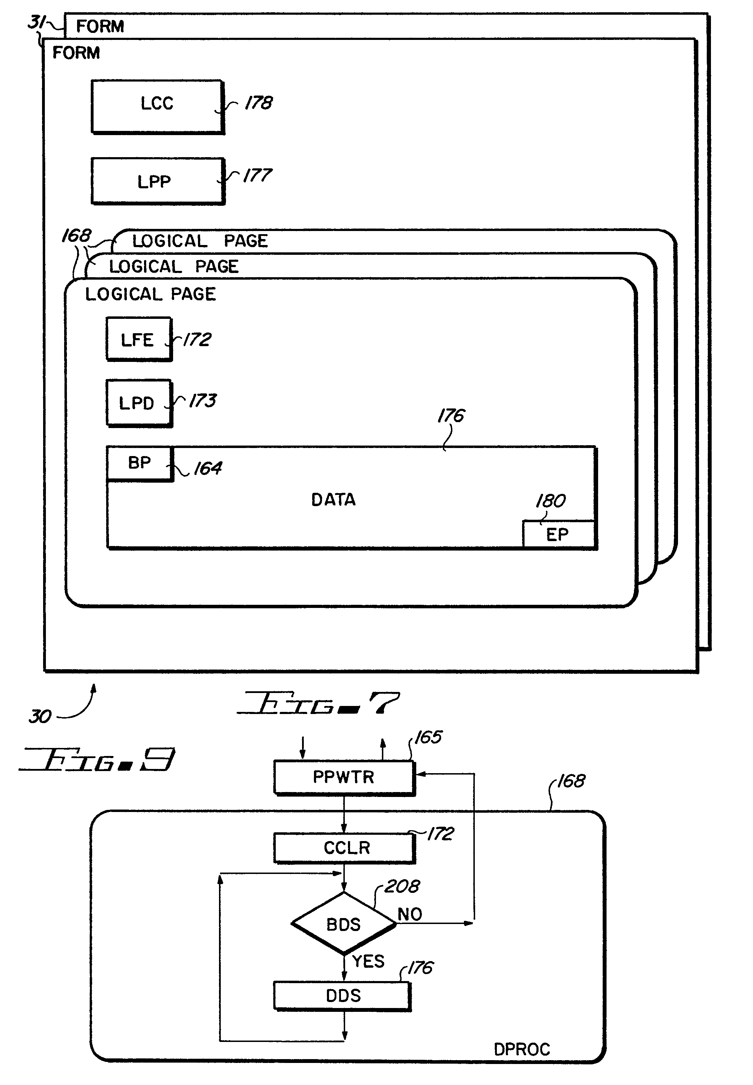

Referring now to Fig. 7, there is shown an
output data set 30 in the composed page format. It will
be understood that this data set exists within the
environment of an electronic data processing host
computer. The data set comprises a plurality of
electronic signals representative of text and control
information. In Fig. 3, output data set 30 is
transmitted through logical channel 61 from selection
and combination means 56. Resources corresponding to
those text controls embedded within the output data set
30 are managed and delivered to visual display 42 by
transmission through logical resource channel 63. These
resources are merged with output data set 30 within
visual display 42 to produce the finished visual display
document. When visual display 42 encounters a resource
control within output data set 30 it accesses the
corresponding resources which have been stored in its
local subsystem memory 41 by transmission from resource
manager 58.

An output data set 30 may contain a plurality
of forms 31, as seen in Fig. 7. Each form 31 may contain
a plurality of logical pages 168, reflecting that a
plurality of logical pages 168 may appear on a single
physical output page produced by visual display 42.
These logical pages 168 are positioned on the physical
output page according to channel control words embedded in output data set 30. If only one logical page is printed on the physical page, as is normally the case, then a single logical page 168 appears in a form generated under control of form descriptors which embody the controls of load copy control 178 and load page position 177.

Each form 31 contains two channel control words which have been embedded under the control of FORMDEF 36. They are the load copy control CCW 178 and the load page position CCW 177. These CCW's control display on each of the logical pages 168 contained within a form 31. This form 31 is used on all sheets until a new form 31 is invoked. The load copy control CCW 178 instructs visual display 42 to use certain information from FORMDEF 36. This is necessary because certain functions are implemented inside visual display 42 during the process of merging the output data set 30 and the various system resources to produce a display. Examples of these functions include suppressions, overlays, and multiple copies of the same form. The load page position CCW 177 supplies information from FORMDEF 36 to visual display 42 on the location within the physical output page of the logical page 31.

Each logical page 168 additionally has two channel control words: load font equivalents CCW 172 and load page descriptor CCW 173. These two control words in logical page 168 are provided by PAGEDEF 32 if input

0145888

data set 22 is conventional line mode data, or by a CPDS active environment group/master environment group if input data set 22 is in composed page format.

Load font equivalent 172 is a pointer which refers to the mapping of fonts in local memory 41 of visual display 42. The actual font digital data used by visual display 42 to produce logical page 168 are transmitted to local memory 41 through logical resource channel 63 separately from output data set 30, which is transmitted to visual display 42 over logical channel 61. Output data set 30, therefore, must have a load font equivalent 172 in order to point to the location in local memory 41 of the font 34 which is used for the logical page 168. The page descriptor indicated by load page descriptor 173 describes the layout for logical page 168. It defines the layout of the page including such characteristics as the width and length of the page.

The channel command words are created from structured fields. Thus, output data set 30 may be conceptualized as a sequence of channel command words, each containing an identification of the type and length of data and a pointer to the start of the data.

The data 176 of logical page 168 is bracketed by a begin page 164 and an end page 180. Also, between begin page CCW 164 and end page 180 there may be a write text CCW to further position the data relative to the page origin determined by load page position 177. Thus, this write text CCW is an offset. Included within data 176, in any order, there may be image, text, page segments, and text controls.

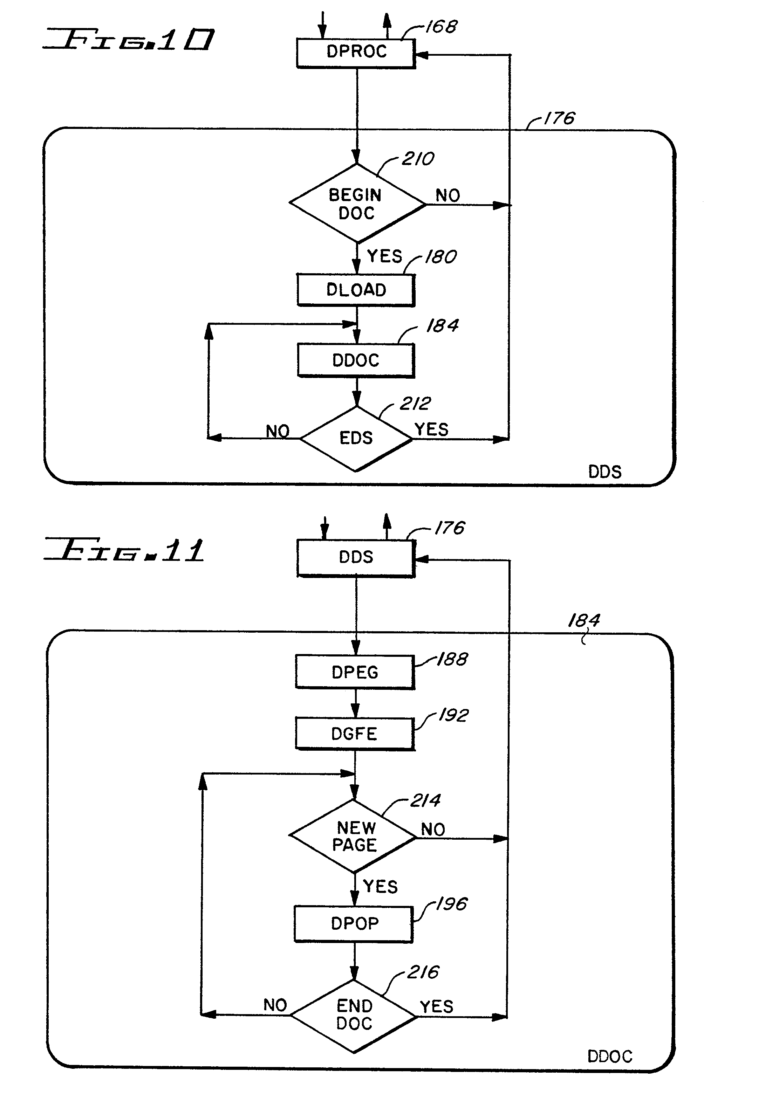

Figs. 8A and 8B describe, in somewhat more detail, the sequence of operations performed in the creation of an output data set 30 from an input data set 22. The sequences shown in Figs. 8A and 8B are not a logical flow but rather a series of recursive procedure calls. The sequence starts when the pending page writer 165 receives a block of information from application program 14 and sends it to a device. The device may be either hardware, such as a display unit, or it may be another piece of software. In the present instance, pending page writer 165 receives an input data set 22 and transmits it to PSF 28 for processing. PSF 28 includes of a main module DPROC 168 and its called procedures.

DPROC 168 first calls makes its optional call CCLR 172 whose function is to clear subsystem memory 41 as previously described for block 43 of Fig. 2. Recall that local memory 41 is only cleared if it is desired that a previous job be removed.

Regardless of whether local memory 41 is cleared, DDS 176 is called. DDS 176 is called by DPROC 168 when DPROC 168 recognizes the beginning of an input data set 22 as seen in Fig. 4.

When control is passed to DDS 176 by DPROC 168, DDS 176 executes DLOAD 180. DLOAD 180 is a resource control program which now loads the default resources into the subsystem and returns control to DDS 176. When DDS 176 detects the beginning of a document, it transfers control to DDOC 184. DDOC 184 determines which resources are required to process the document and compares this requirements list to a list of resources already available within the memory of visual display 42, which is maintained within resource manager 58, shown in Fig. 3.

If any of the resources required are not currently resident within visual display 42, DDOC 184 calls modules DPEG 188 and DGFE 192. DPEG (page environment group) and DGFE (generate form environment) access PAGEDEF 32 and FORMDEF 36. DPEG 188 sets up internal control structures to call for a master environment group and an active environment group. DGFE 192 calls up a form environment group. As determined by the contents of PAGEDEF 32 and FORMDEF 36, resources are retrieved from DASD which DDOC 184 has determined are required but are not currently resident in visual display 42.

If the beginning of a page is then detected by DDOC 184, it transfers control to DPOP 196. DPOP 196 determines whether any resources are required for the page being processed but not called globally for the document; for example, a font which is unique to the curret page. If it does locate such requirements, DPOP 196 calls DPEG 188 and DGPE 200. DGPE 200 calls resource manager 58 which uses DLOAD 180 to access these resources. DGPE 200 handles segments 20 and fonts 34. Whenever any resources are so accessed, either through a call from DLOAD 180 or a call from DPOP 196, the resource list maintained within resource manager 58 is updated.

As previously described, input data set 22 may have a conventional line data format or a composed page format or a mixture of line data and composed page data. Systems printing data include both pure line data and the mixture. In decision diamond 48 of Fig. 8B, a determination is made as to which format of input data set 22 is being presented for processing, and execution is passed to the appropriate data handler.

The two available data handlers are the SSPM (System Print Manager) data handler 54, which processes conventional line data and the mixture of line data and composed page data, that is, systems printing data, and the composed page data handler 52 which processes the input data sets containing only composed page data. Each of these in turn calls appropriate modules to transmit information to the output data set 30. These modules include DIPS 204 and DIMG 206 which are called by SSPM data handler 54. DIPS 204 causes include page segments to be embedded and corresponding segments 20 have been transmitted to visual display 42 by DGPE. DIMG 206 causes images to be embedded in output data set 30. In addition to calling DIPS 204 and DIMG 206 for the same purposes that SSPM data handler 54 called them, composed page data handler 52 calls DTEXT 202. DTEXT causes textual information to be transmitted to output data set 30.

Referring again to Fig. 1, data to be printed by application program 14 in the form of input data set 22 are processed by PSF 28 into an output data set 30 and transmitted to output writer 38 for display on visual display 42. The input data set 22, as seen in Fig. 4, may consist of line data organized in the form of a plurality of records 68 or may already be in composed page form. The default processing shown in block 44 of Fig. 2 determines all resources which are used if no specific resources are specified. In resource processing block 46 under control of PAGEDEF 42 and FORMDEF 36, resources which are required for the processing of input data set 22 are compared with lists retrieved as necessary, as shown in the sequence of operations diagram Figs. 8A and 8B. At this point a determination is made in decision diamond 48 as to whether input data set 22 is in composed page format or in line data format, and the appropriate data handler is called in order to create output data set 30.

0145888

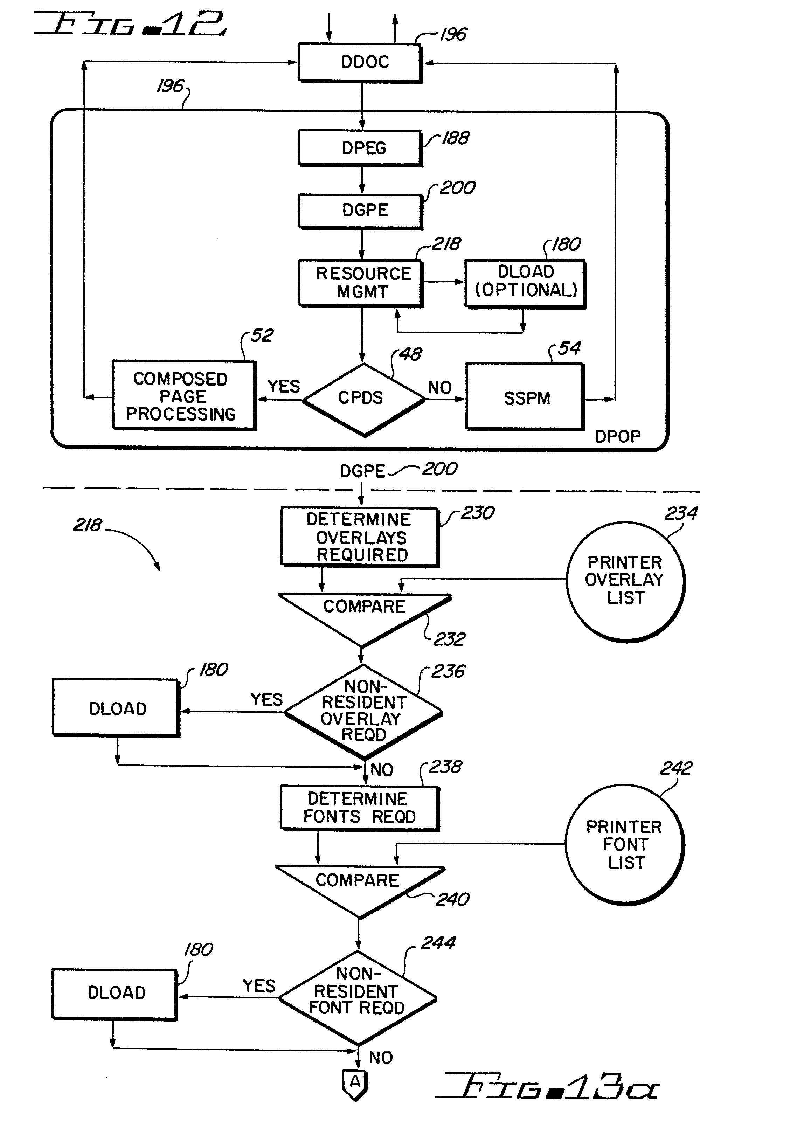

Having described the sequence of operations in Figs. 8A and 8B, the description will now turn to Figs. 9 - 17 which detail the logical flow of control which produces the time sequence detailed here and above.

Turning now to Fig. 9, pending page writer 165 is a software and spooling device of a known type which spools its output to routine DPROC 168. DPROC 168 may begin by a call to routine CCLR 172. CCLR 172 is optionally called to clear the printer subsystem memory 41. In addition to simply clearing and resetting, CCLR 172 may invoke the resource manager 58 to transfer known required resources to visual display 42. DPROC 168 next examines in decision 208 the input data set 22 to determine whether a new data set is beginning. In the absence of a beginning, DPROC 168 returns control to PPWTR 165. Upon detection of the beginning by decision 208, DPROC 168 calls routine DDS 176. Upon normal termination DDS 176 returns control to DPROC 168 for further examination of data sets according to decision 208.

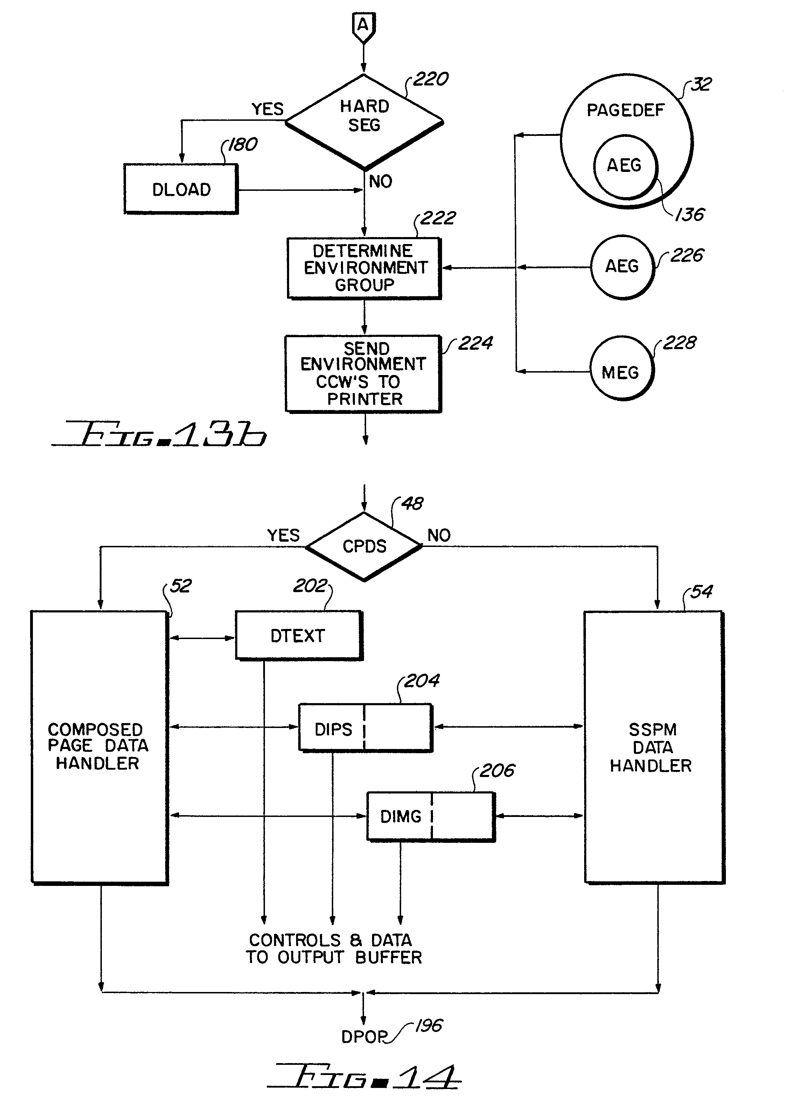

Referring now to Fig. 10, DDS 176 begins by detecting the start of a record which signifies the beginning of a new document. Upon failure to detect the beginning of a new document, DDS 176 returns control to DPROC 168. This corresponds to a return to decision diamond 208 of Fig. 9. If a start of a record 70 is detected in decision diamond 210, DDS 176 may execute a call to DLOAD 180 if any system resources are required. DLOAD 180 transfers default resources to the visual

0145888

controller 60. After the return from DLOAD 180, DDS 176 executes a call to DDOC 184. DDOC processes documents by processing in a cyclic manner a plurality of pages with the associated forms and copy modifications and returns control to DDS 176 after it has finished processing the last page. DDS 176 then executes decision 212 and determines whether the end of the data set has been reached. If DDS 176 determines that the end of the data set has not been reached, DDS 176 again calls DDOC 184 for continued processing. However, if the end of the data set has been reached, DDS 176 returns to its calling module DPROC 168.

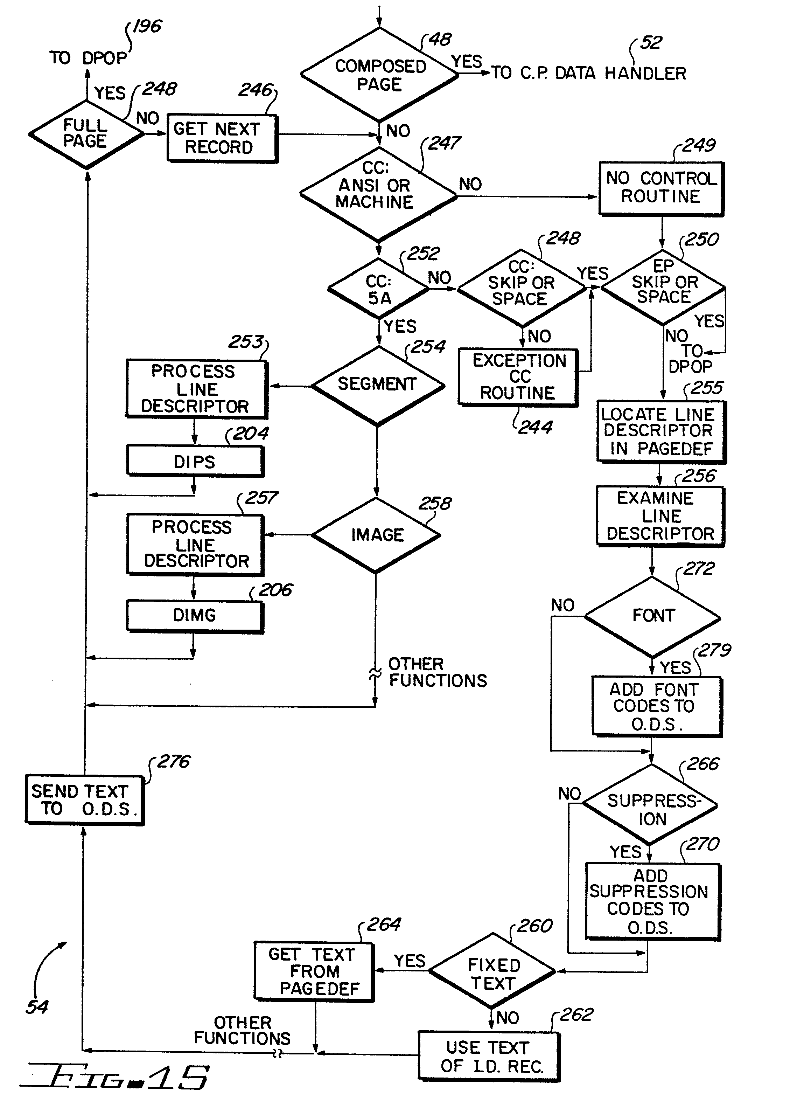

Referring now to Fig. 11, a more detailed representation of DDOC 184 is shown. In DDOC 184, control is passed to routine DPEG 188 and DGFE 192, both of which function to recognize and transmit presently unavailable form-related resources to visual display 42. DDOC 184 then executes decision 214 to determine whether a new page is beginning. If a new page is initiated, control transfers to routine DPOP 196 which processes one page and returns control to decision 216 which determines whether the end of document has been reached. If the end of document has not been reached, control returns to decision 214 for a new page examination. However, if the end of document is detected, control is returned by DDOC 184 to its calling routine DDS 176.

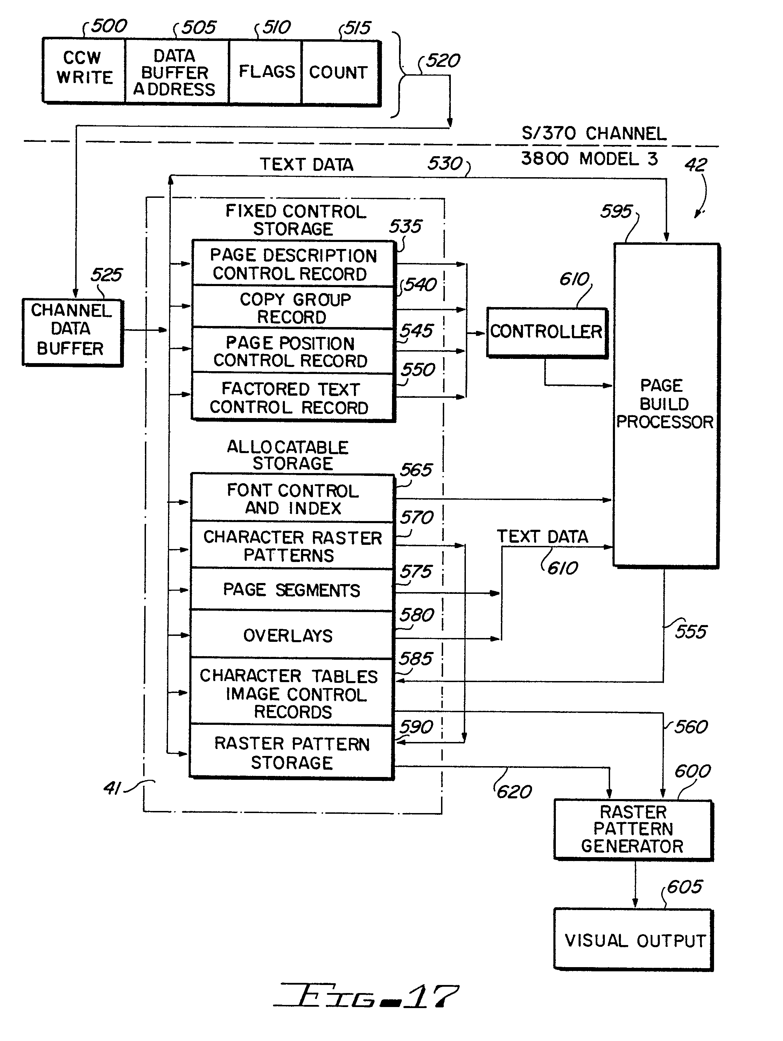

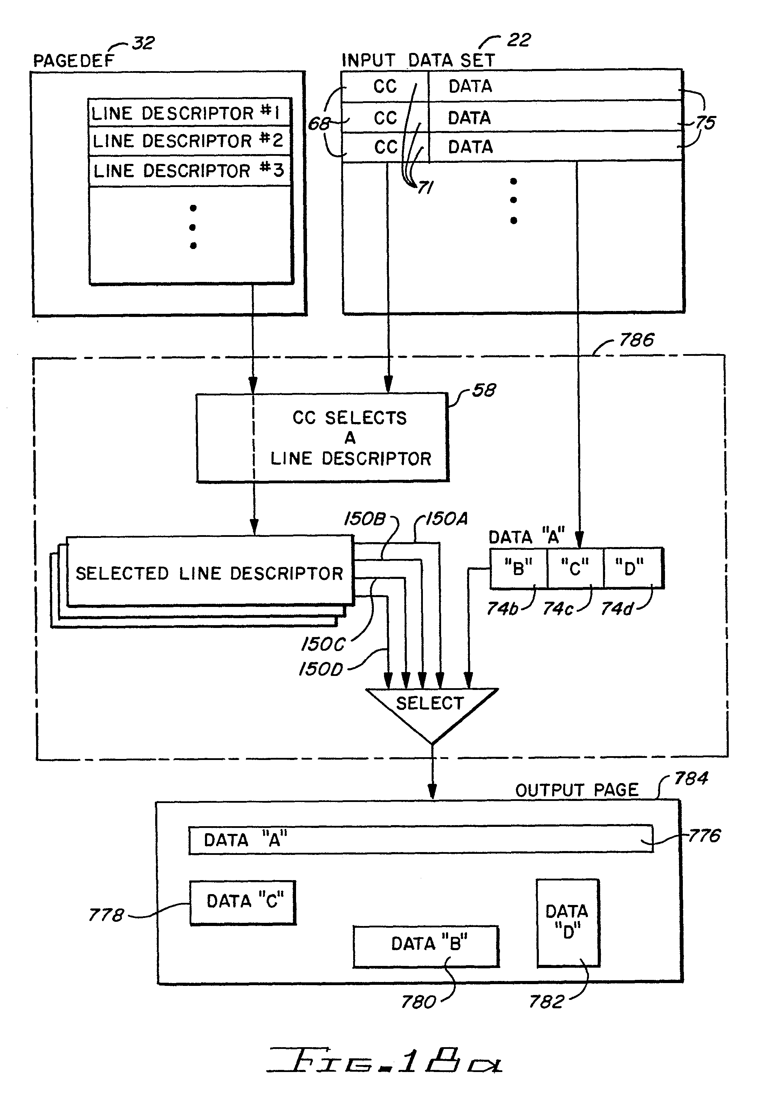

Referring now to Fig. 12, which is a more detailed view of routine DPOP 196, DPOP 196 begins by transferring control to routine DPEG 188 and then to routine DGPE 200, both of which transfer currently unavailable resources to visual display 42 via logical resource channel 63 and device controller 60. The call of DPEG 188 is optional. If the page environment is already set up the call is not executed. During execution of routine DGPE, resource management 218 is called. Resource management 218 may call DLOAD 180. If resources which are required are not currently resident in local memory 41 of video display 42, DLOAD is called to access them. Resource management 218 will be hereinafter discussed in full detail during discussions of Figs. 13A and 13B. Following resource management 218, decision 48 is executed to determine the format of input data set 22. It will be remembered that input data set 22 may be in either system print format or composed page format.

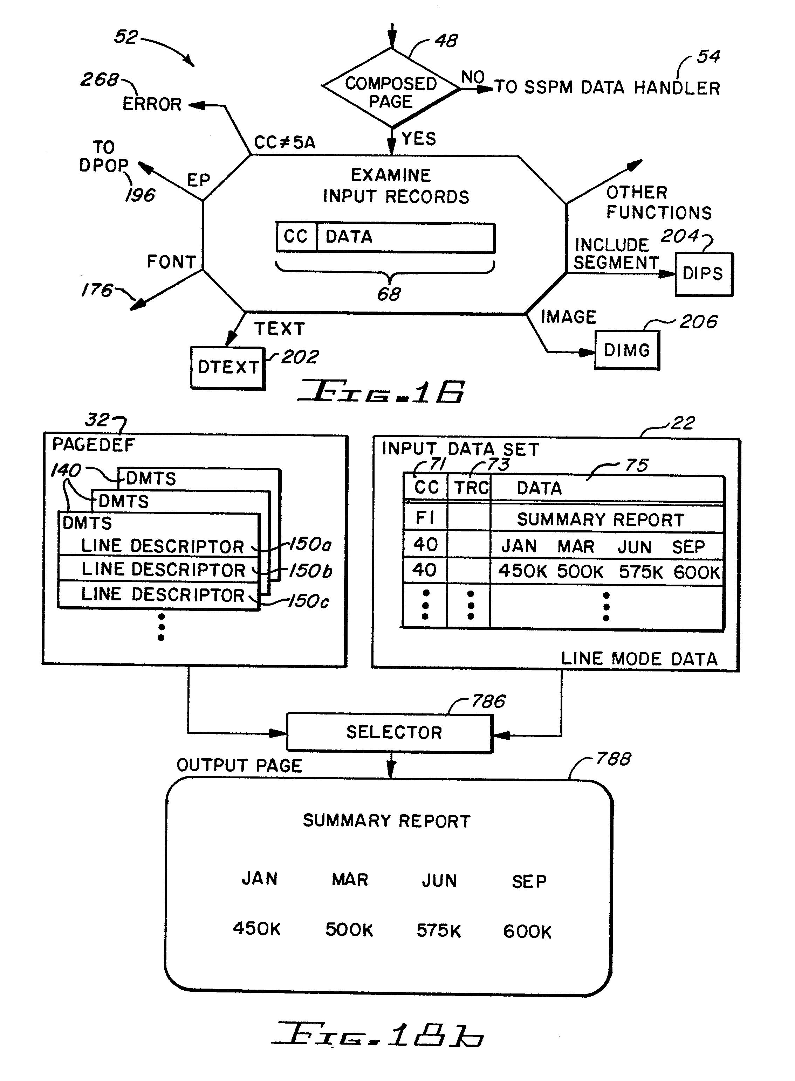

If decision 48 detects composed page format, control is transferred to composed page processing 52, as described with respect to Figs. 14 and 16. If decision 48 detects conventional line data format, control is transferred to SSPM data handler 54, previously described with respect to Figs. 14 and 15. Both composed page data handler 52 and SSPM data handler 54 return control upon completion of operations to DPOP and then to DPOP's calling module, DDOC 196.

Referring now to Figs. 13A and 13B which represent resource management 218 in more detail, DGPE 200 determines the page resources required and calls resource manager 58 to transmit those resources to visual display 42 via logical resource channel 63 and device controller 60. Procedure 230 determines which overlays 16 are required within the currently executing FORMDEF 36 by consulting overlay list 97 of FORMDEF 36, as shown in Fig. 5. The list of overlays so derived is compared at comparison 232 with printer overlay list 234, which is a list of overlays currently resident within visual display 42. This list is maintained by resource manager 58. Decision 236 determines whether any overlays required by FORMDEF 36 are not currently available in visual display 42 and thus not listed. Such overlays must be transmitted to visual display 42. If overlays must be transmitted, decision 236 calls DLOAD 180 to transmit them to visual display 42 via logical resource channel 63 and device controller 60.

After processing the overlay requirements as determined by decision 236, procedure 238 is initiated to determine the character fonts 34 required by the current PAGEDEF 32. For systems printing such a data, determination is accomplished by consulting font list 132 within PAGEDEF 32, as seen in Fig. 6. For CPDS data, such a determination is accomplished using the master environment group or the form environment group. Comparison 240 compares the list assembled by procedure 238 with printer font list 242, also maintained by resource manager 58. Decision 244 determines whether any fonts 34 required according to font list 132 are not currently available within visual display 42. If fonts 34 are required, decision 244 transfers control to routine DLOAD 180 for transmission of fonts to visual display 42 via logical resource channel 63 and device controller 60. It should be remembered that resource manager 58 maintains a list of available resources and updates such lists following transmission of additional resources such as overlays 16 and fonts 34, to visual display 42.

Referring now to Fig. 13B, which is a direct continuation at off page connector A of Fig. 13A, decision 220 determines whether a hard segment is included in input data set 22. This determination is shown in a shorthand which represents the series of steps used to determine whether overlays or fonts are required, as shown in Fig. 13A. A hard segment is a resource segment 20 which is known by the application program 14 and requested by that program in its generated input data set. If decision 220 determines that a hard segment is required, it transfers control to routine DLOAD 180 for transmission of that segment to visual display 42 via resource channel 63 and device controller 60. If no hard segments are required, as determined in decision 220, control is transferred to determination 222 for examination of the current page environment group.

Within PSF 28, an environment group is defined as that set of parameters under which a document is processed. The currently active page definition constitutes the active environment group, while the default page definition constitutes the master environment group. An environment group determines the manner in which control characters and formats of the input data set 22 are translated for subsequent transmission to visual display 42. Translation is necessary because the input data set 22 may contain characters, controls, and formats not acceptable to visual display 42.

When processing an input data set 22, conventional line mode data determination 222 examines PAGEDEF 32 which contains an active environment group 136 for every data map 124. When processing input data sets 22 containing CPDS format, determination 222 seeks a CPDS active environment group 226 which is optionally contained in CPDS pages. CPDS format also contains a master environment group 228 at a higher level within the data set. Any pages of CPDS format data which do not contain their own complete active environment group 226 are controlled by a default of the omitted controls to the master environment group 228.

Determination 222 thus yields a modified environment group based upon the requirements expressed by PAGEDEF 32 in its active environment group 136 or, in the CPDS case, in the received master environment group 228 or the received active environment group 226. This modified environment group controls subsequent processing of input data set 22 and formatting of output data set 30. Subsequent to determination 222, channel command words representative of the modified page environment group are transmitted to output channel 61 in procedure 224. This concludes the detailed discussion of resource management module 218.

Referring now to Fig. 14 which is a general overview of the logical flow relationships between the composed page data handler 52 and SSPM data handler 54, input data set 22 is processed in accordance with decision 48 and routed to either composed page data handler 52 or SSPM data handler 54 on the basis of said decision 48. If the first character in an input data set 22 is a "5A" the entire data set is CPDS. Composed page data handler 52, in turn, calls DTEXT 202 in order to transmit textual information for output data set 30, DIPS 204 to embed include page segment commands or DIMG 206 to transmit images for output data set 30. Upon completion, composed page data handler 52 returns control to its calling routine DPOP 196.

SSPM data handler 54 calls DIPS 204 to transmit a segment 20 for output data set 30 or calls DIMG 206 to transmit an image for output data set 30. SSPM data handler 54 returns control upon completion to its calling routine DPOP 196.

Referring now to Fig. 15 which is a more detailed description of the SSPM data handler 54, input data sets 22, which are in the conventional line data format, are transferred by virtue of decision 48 to decision 247 for examination of the first carriage control (CC) present. Decision 247 determines whether this first CC is an American National Standards Institute (ANSI) character or a machine character. If the first CC is neither of these, no control routine is being executed as seen in block 249 and execution proceeds to decision 250. If decision 247 determines that the first CC is either an ANSI-defined character or a machine character, decision 252 then determines whether it is a "5A". "5A" indicates that the record being processed is in composed page format (i.e., the input data set 22 being processed is an example of a record mixture, containing both conventional line mode data and composed page data). If decision 252 determines that the CC is not "5A" execution proceeds to decision 248.

Decision 248 determines whether this CC of line mode input data set 22 is either a skip or a space. If the CC is not a skip or space, an exception control character routine is executed in block 249. In this routine the unknown control character is tested to determine whether the data set should be treated as ANSI or machine control code, and execution proceeds to decision 250. When control is passed to decision 250 by any one of the above paths, decision 250 determines whether an end of page is appropriate. If decision 250 determines that end of page is required, control is returned to calling routine DPOP 196. If, however, end of page is not required, the line descriptor 150 of the record being processed is located in the controlling PAGEDEF 32 and control is transferred to examination 256.

Examination 256 analyzes the line descriptor 150 within currently active PAGEDEF 32 and maintains the results of the analysis in memory. Control is subsequently passed to decision 272 which examines the results of the analysis of examination 256 in memory to determine whether fonts 34 are required, as indicated by fonts field 145 of line descriptor 150 seen in Fig. 6. If such fonts 34 are required, procedure 279 embeds codes representative of said fonts in output data set 30.

Decision 266 examines the results of examination 256 to determine whether a suppression is indicated by suppression field 147 of line descriptor 150 within data map transmission subcase 140 within data map 124 within active PAGEDEF 32. If such a suppression is indicated, procedure 270 brackets the data to be suppressed with codes representative of said suppression. Decision 260 again interrogates the results of examination 256 to determine whether constant data representative of fixed text is present in fixed buffer 144 as indicated by constant data field 149 in line descriptor 150. If such fixed text is present, procedure 264 retrieves said fixed text from fixed text buffer 144 within active PAGEDEF 32. If no such fixed text is required, procedure 262 retrieves the text contained within input data set 22.

Similar procedures to those already detailed are undertaken to determine such other parameters as are described in line descriptor 150 of data map transmission subcase 140 of data map 124 of current PAGEDEF 32. Subsequently, all text with embedded codes representative of resources required is transmitted by procedure 276 to output data set 30 via logical channel 61. Control is then transferred to decision 248 for determination of whether the current logical page 168 is filled with data. If logical page 168 is full, control is returned to calling routine DPOP 196. If, however, logical page 168 is not full, routine 246 obtains the next record of input data set 22 and returns control to decision 247.

If decision 247 determines the CC is either ANSI or a machine control character, control is transferred to decision 252 to determine its value. If the CC examined in decision 252 does not indicate that the data is in composed page form, control is transferred to decision 248 as previously described. However, if the CC value for a composed page record is found, the input data set 22 being processed is a combination of conventional line mode data and composed page format, and control is transferred to decision 254 to determine whether a segment 20 is being requested. If such a segment 20 is requested, line descriptor 150 is processed as seen in block 253 and DIPS 204 is called to embed an include page segment control into input data set 22. Control then passes to decision 248 for determination of the completion of logical page 168.

If no segment is required, as determined by decision 254, control passes to decision 258 which determines whether an image is required. An image is a raster data representation of a graphic 18 or complex visual representation which cannot be displayed using standard character fonts 34. If an image is required, line descriptor 150 is processed as seen in block 257, and DIMG 206 is called to transfer that image to visual display 42 via logical channel 61 by including it in input data set 22 and device controller 60. Subsequently, all data received in the composed page form, supported in a combination of conventional line mode data and composed page format, is transmitted by procedure 276 to output data set 30 via logical channel 61. Control then passes to decision 248 for determination of whether logical page 168 is full.

It should be noted that the flow of control beyond decision 252, encompassing decisions 254 and 258 and their calls to DIPS 204 and DIMG 206, constitutes a treatment of composed page format data within an overall data set conforming to the conventional line mode data format.

Referring now to Fig. 16, which is a detailed illustration of the composed page data handler 52, the flow of control of composed page data handler 52 is analogous to a case statement as is well-known in the data processing art. The case statement corresponds to a case of: resource [r] for which there are several alternatives, r includes the include page segment command which invokes routine DIPS 204; images 18 which invoke routine DIMG 206; text-type resources which invoke routine DTEXT 202; alternative 176 which sends fonts 34 to visual display 42; and indications of end of page conditions which cause a return to calling routine DPOP 196. In the event that the CC of the input data record is not a 5A, error routine 268 is called to inform all calling routines and, in turn, a human operator of the error condition.

Referring now to Fig. 17, there is shown a detailed description of the internal configuration of the IBM 3800 Model 3 Printing Subsystem.

A short description of this system is deemed helpful to a more complete explanation of the present invention.   Channel data buffer 525 is connected to a communications channel from a host CPU via line 520. Communicated across channel 520 are channel command words containing channel command word 500, data buffer addresses 505, status flags 510, and data counts 515. Channel data buffer 525, in turn, communicates data to both fixed control storage and allocatable control storage within subsystem 42.   Text data is communicated from channel data buffer to page build processor 595 over line 530.

Page description control records containing information descriptive of forms derived from FORMDEF 32 are transmitted to fixed control storage 535.   Form environment group records, containing information descriptive of form environment groups 93 derived from FORMDEF 36, are transmitted via load copy control 178 to fixed control storage 540.   Page position control records containing information are derived from FORMDEF 36 at its page position record 107 or, in default situations, its page position 116 and are transmitted via load page position 177 to fixed control storage 545.   Constant data derived from PAGEDEF 32 are transmitted to fixed control storage 550.   All control signals maintained in fixed control storage 535, 540, 545, and 550 are transmitted via controller 610 to page build processor 595.

Font control and index information associated with raster patterns representative of characters within said fonts are transmitted from channel data buffer 525 to allocatable stores 565 and 570. Said character raster patterns stored at allocatable storage 570 are subsequently transmitted to raster pattern storage 590 for later inclusion by raster pattern generators 600. Other resources, including page segments 20, overlays 16 and images, are transmitted from channel data buffer 525 to allocatable storage and held respectively at allocatable storage 575, 580 and 585. Font control and index information are transmitted from allocatable storage 565 to page build processor 595 for control and selection of display fonts within the currently processed page.

Page segments held at allocatable storage 575 and overlays held at allocatable storage 580 are similarly transmitted to page build processor 595 for inclusion in the currently processed page. The output of page build processor 595, representative of a completed page of display information, is transmitted to allocatable storage 585 via transmission line 555. Such information is subsequently transmitted to raster pattern generator 600 via line 560. Raster pattern generator 600 includes a buffer for raster pattern data,

72    0145888

a serializer for extraction of data from said buffer,
and a modulator for a laser.  Said laser imparts the
raster pattern stored within the raster pattern buffer
to visual output 605.

Claims:

1.      A method for creating visual displays of data from an input data set comprising data-representing signals which data in the input data set are not fixed into display-acceptable format until storage thereof into a local memory of a visual display device characterized by the steps of:

a) selecting at least one of a plurality of stored sources (16, 18, 20, 34) of resource information required to effect desired ones of said visual displays of the input data set (22);

b) embedding into the input data set visual presentation control signals derived from said selected resource information to generate an output data set (30) comprising data-representing signals; and

c) storing the selected resource information and the output data set in a local memory (41) for enabling said desired visual displays.

2.      The method of claim 1 wherein step (c) further includes the step of storing said sources of resource information separately from said input data set and said output data set.

3.      The method of claim 1 in which step (a) further includes selecting the sources of resource information as defined by and under the control of signals stored in a plurality of definition files (32, 36) which definition files are stored separately from said input data set, said sources of resource information and said output data set.

4.      The method of claim 3 which includes the further step of providing differing displays of the same output data set related to differing definition files.

5.      The method of claim 4 which includes the further steps of providing a single definition file comprising differing definitions and providing differing displays of one or more transmissions of the output data· set related to the differing definitions.

6.      The method of claim 1 in which step (a) also includes determining a form environment (93) as defined by and under the control of the resource information contained in a form definition file (36).

7.      The method of claim 1 in which step (a) also includes determining a page environment (136) as defined by and under the control of the resource information in a page definition file (32).

8.      The method of claim 1 in which step (b) further includes embedding into the input data set visual presentation control signals under the control of signals stored in a plurality of definition files.

9.      The method of claim 1 in which step (a) includes selecting the sources of resource information including selecting segment (20), overlay (16), font (34) and graphic (18) information.

10.      The method of claim 1 in which step (c) further includes the step of applying to said local memory selected resource information by way of a first logical channel (63) and applying to said local memory the output data set by way of a second logical channel (61).

75 0145888

11. The method of claim 1 in which step (a) further includes the step of selecting only those stored sources of resource information which are not currently resident in the local memory.

12. The method of claim 1 which includes the step of determining whether the input data set contains line data, composed page data, or a combination of line data and composed page data.

13. The method of claims 1 and 12 wherein the input data set contains line data in which steps (a) and (b) include the further steps of:

determining, under the control of a page definition file, whether a record (68) in the input data set requires fixed text and selecting said fixed text when said determination is affirmative; and

determining, uner the control of a page definition file, whether a record in the input data set is to be suppressed and embedding a suppression code therein when said determination is affirmative.

14. The method of claims 1 and 12, which includes the further steps of:

determining, under the control of a page definition file, whether a record in the input data set requires a font and selecting that font when said determination is affirmative; and

determining, under the control of a page definition file, whether a record in the input data set requires a segment and selecting that segment when said determination is affirmative.

76    0145888

15.    The method of claims 1 and 12, wherein the input data set contains composed page data in which step (a) includes the further step of:

(i) determining whether a record of an input data set requires a segment and selecting that segment when said determination is affirmative; and

(ii) determining whether an input data set requires an image and selecting that image when said determination is affirmative.

16.    A system for creating visual displays of data from an input data set (22) comprising data-representing signals which data in the input data set are not fixed into display acceptable format until storage thereof into local memory (41) of a visual display device (42) characterized by:

a) a plurality of stored sources (16, 18, 20, 34) of resource information required to effect said visual displays of the input data set;

b) means (28) for selecting at least one of said plurality of stored sources of resource information required to effect desired ones of said visual displays;

c) means for deriving visual presentation control signals from the selected resource information;

d) means for embedding said visual presentation control signals into the input data set to generate an output data set (30) comprising data-representing signals; and

e) means (38) for storing the selected resource information and the output data set in the local memory for enabling said desired visual displays.

0145888

17. The system of claim 16 in which said storing means include additional means for storing said resource information separately from said input data set and said output data set.

18. The system of claim 16 in which there is provided definition file means (32, 36) for controlling the selection of said stored sources of resource information, and said storing means includes additional means for storing said definition file means separately from said input data set, said stored sources of resource information and said output data set.

19. The system of claim 18 in which said definition file means includes means for providing desired differing displays of the same output data set related to differing definition files.

20. The system of claim 18 in which the definition file means includes a form definition file means (36) for determining a form environment as defined by and under the control of the resource information contained in said form definition file means.

21. The system of claim 18 in which the definition file means includes apage definition fiel means (32) for determining a page environment as defined by and under the control of the resource information in said page definition file means.

22. The system of claim 16 in which the visual display device comprises an all-points addressable printer.

0145888

APPLICATION
PROGRAM 14

50

SEGMENT 20

50

INPUT
DATA SET 22

50

OVERLAY 16

50

GRAPHICS 18

50

FORMATTER 24

40

PRINT
SERVICES
FACILITY 28

PAGEDEF 32

50

FONT 34

50

FORMDEF 36

50

UTILITY
PROGRAM

61

OUTPUT
DATA SET 30

63

50

OUTPUT
WRITER 38

50

LOCAL
MEMORY 41

VISUAL
DISPLAY 42

Fig.1

Fig-2

INPUT DATA SET _22_

FORMDEF _36_

CONTROL SIGNALS

SELECTION AND COMBINATION MEANS

RESOURCE MANAGER

_56_ _58_

SEGMENTS _20_

OVERLAYS _16_

FONTS _34_

SUPPRESSIONS _62_

_28_

_61_ RESOURCES _63_

PAGEDEF _32_

OUTPUT DATA SET _30_

DEVICE CONTROLLER _60_

VISUAL DISPLAY

LOCAL MEMORY _41_

_42_

Fig.3

0145888

RECORD

RECORD

68

RECORD

RECORD

73    75

71    | CC | TRC | DATA |

74  TEXT FIELD (DATA)

CONTROL CHARACTER (DATA)

78

INPUT DATA SET

67

*Fig-4*  22

*Fig-8b*

165

PPWTR

168

DPROC

172

CCLR

176

DDS

180

DLOAD

184

DDOC

188

DPEG

A

*Fig-8a*

Ⓐ

| DGFE | 192

| DPOP | 196

| DPEG | 188

| DGPE | 200

48

COMPOSED PAGE

YES          NO

52                                54

COMPOSED PAGE DATA HANDLER        SSPM DATA HANDLER

202                    204                    206

DTEXT              DIPS              DIMG

FIG.5

FORMDEF

DOCUMENT ENVIRONMENT GROUP

*700*

99

OVERLAY LIST *97*

RASTER *120*

SUPPRESSION NAME LIST *113*

PAGE POSITION *116*

FORM GROUP DESC.

| XMSN # | MMP ID |
|--------|--------|
| ⋮ | ⋮ |
| *702* | *704* |

36

95 MEDIUM MAP

MEDIUM MAP

MEDIUM MAP

I.D. *101*

93 F.E.G.

F.E.G.

FORM ENVIRONMENT GROUP

PAGE POSITION *107*

104 COPIES / MMCID *103*

92 M.M.C.

M.M.C.

MEDIUM MODIFICATION CONTROL

OVERLAY ID *96*

SUPPRESSION ID *112*

FORMS FLASH *108*

I.D. *105*

0145888

0145888

PAGEDEF

PAGE GROUP DESC. *710*

| XMSN # | ID 125 |
|--------|--------|
| ⋮ | ⋮ |

*712*   *714*

*124*

DATA MAP

DATA MAP

DATA MAP

I.D.

*125*

ACTIVE ENVIRONMENT GROUP

| FONT LIST | SEGMENT LIST | LOGICAL PAGE SIZE |
|-----------|--------------|-------------------|

*136*

*132*   *128*   *137*

*140*

| *142* | *143* | *145* | *146* | *147* | *149* | *151* | *153* | *155* |
|-------|-------|-------|-------|-------|-------|-------|-------|-------|
| START | DIRECTION | FONT | ROTAT-ION | SUPPR-ESSION | CONST. | LIST SPACE | LIST SKIP | LIST REUSE |

*150*

FIXED TEXT BUFFER

*144*

DATA MAP TRANSMISSION SUBCASE

_Fig_6_        *32*

0145888

## Fig. 7

FORM 31

FORM

LCC 178

LPP 177

LOGICAL PAGE 168

LOGICAL PAGE

LOGICAL PAGE

LFE 172

LPD 173

176

BP 164

DATA

180

EP

30

## Fig. 9

PPWTR 165

CCLR 172

BDS 208 — NO

YES

DDS 176

168

DPROC

0145888

## Fig.10

DPROC 168

176

DDS

BEGIN DOC 210 — NO →

YES 180

DLOAD

DDOC 184

EDS 212
NO ← EDS → YES

## Fig.11

DDS 176

184

DPEG 188

DGFE 192

NEW PAGE 214 — NO →

YES

DPOP 196

END DOC 216
NO ← END DOC → YES

DDOC

# FIG_12

9/14    C145888

DDOC — 196

DPEG — 188

DGPE — 200

RESOURCE MGMT — 218 → DLOAD (OPTIONAL) — 180

COMPOSED PAGE PROCESSING — 52 ← YES — CPDS — 48 — NO → SSPM — 54

DPOP

DGPE — 200

# FIG_13a

218

DETERMINE OVERLAYS REQUIRED — 230

COMPARE — 232 ← PRINTER OVERLAY LIST — 234

DLOAD — 180 ← YES — NON-RESIDENT OVERLAY REQD — 236 — NO

DETERMINE FONTS REQD — 238

COMPARE — 240 ← PRINTER FONT LIST — 242

DLOAD — 180 ← YES — NON-RESIDENT FONT REQD — 244 — NO

A

A

HARD SEG _220_

YES → DLOAD _180_

NO

PAGEDEF _32_

AEG _136_

DETERMINE ENVIRONMENT GROUP _222_

AEG _226_

SEND ENVIRONMENT CCW'S TO PRINTER _224_

MEG _228_

_Fig. 13b_

CPDS _48_

YES    NO

COMPOSED PAGE DATA HANDLER _52_

DTEXT _202_

DIPS _204_

DIMG _206_

SSPM DATA HANDLER _54_

CONTROLS & DATA TO OUTPUT BUFFER

DPOR _196_

_Fig. 14_

0145888

_Fig-15_

_Fig_17_

PAGEDEF ⁓ 32

INPUT DATA SET ⁓ 22

| CC | DATA |
|---|---|
| CC | DATA |
| CC | DATA |

LINE DESCRIPTOR #1

LINE DESCRIPTOR #2

LINE DESCRIPTOR #3

68

71

75

786

CC SELECTS
A
LINE DESCRIPTOR ⁓ 58

150B  150A

SELECTED LINE DESCRIPTOR

DATA "A"

| "B" | "C" | "D" |
|---|---|---|

74b  74c  74d

150C
150D

SELECT

OUTPUT PAGE ⁓ 784

DATA "A" ⁓ 776

DATA "C"

778

DATA "B"

DATA "D"

780  782

Fig-18a

*52*

*268* ERROR

*48* COMPOSED PAGE — NO → TO SSPM DATA HANDLER *54*

CC≠5A

TO DPOP *196*

EP

YES

EXAMINE INPUT RECORDS

| CC | DATA |
|----|------|

*68*

OTHER FUNCTIONS

INCLUDE SEGMENT *204* → DIPS

FONT

*176*

TEXT

DTEXT *202*

IMAGE → DIMG *206*

**Fig.16**

---

PAGEDEF *32*

*140* DMTS

DMTS

DMTS

LINE DESCRIPTOR *150a*

LINE DESCRIPTOR *150b*

LINE DESCRIPTOR *150c*

INPUT DATA SET *22*

*71* *73* *75*

| CC | TRC | DATA |
|----|-----|------|
| FI | | SUMMARY REPORT |
| 40 | | JAN  MAR  JUN  SEP |
| 40 | | 450K 500K 575K 600K |
| ⋮ | ⋮ | ⋮ |

LINE MODE DATA

SELECTOR *786*

OUTPUT PAGE *788*

SUMMARY REPORT

| JAN | MAR | JUN | SEP |
|-----|-----|-----|-----|
| 450K | 500K | 575K | 600K |

**Fig.18b**